(19) Europäisches Patentamt
European Patent Office
Office européen des brevets

(11) **EP 3 893 090 B1**

(12) **EUROPEAN PATENT SPECIFICATION**

(45) Date of publication and mention
of the grant of the patent:
**01.06.2022   Bulletin 2022/22**

(51) International Patent Classification (IPC):
***G06F 3/01*** *(2006.01)*

(21) Application number: **20169015.3**

(52) Cooperative Patent Classification (CPC):
**G06F 3/012; G06F 3/013**

(22) Date of filing: **09.04.2020**

(54) **METHOD FOR EYE GAZE TRACKING**

VERFAHREN ZUR BLICKVERFOLGUNG

PROCÉDÉ DE SUIVI DU REGARD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.10.2021   Bulletin 2021/41**

(73) Proprietor: **Irisbond Crowdbonding, S.L.**
**20018 Donostia-San Sebastián, Guipuzkoa (ES)**

(72) Inventor: **Martínez, Alberto Caro**
**48220 Abadiño Matiena, Bizkaia (ES)**

(74) Representative: **Fleuchaus, Michael A. et al**
**Fleuchaus & Gallo Partnerschaft mbB**
**Patentanwälte**
**Steinerstraße 15/Haus A**
**81369 München (DE)**

(56) References cited:
**US-A1- 2019 212 815     US-A1- 2020 043 236**

- **SEONWOOK PARK ET AL: "Learning to find eye region landmarks for remote gaze estimation in unconstrained settings", EYE TRACKING RESEARCH & APPLICATIONS, ACM, 2 PENN PLAZA, SUITE 701NEW YORKNY10121-0701USA, 14 June 2018 (2018-06-14), pages 1-10, XP058409790, DOI: 10.1145/3204493.3204545 ISBN: 978-1-4503-5706-7**
- **Xucong Zhang ET AL: "MPIIGaze: Real-World Dataset and Deep Appearance-Based Gaze Estimation", IEEE Transactions on Pattern Analysis and Machine Intelligence, 24 November 2017 (2017-11-24), pages 1-14, XP055590368, DOI: 10.1109/TPAMI.2017.2778103 Retrieved from the Internet: URL:https://arxiv.org/pdf/1711.09017.pdf [retrieved on 2019-05-20]**

**Description**

The invention refers to the field of eye gaze tracking methods and eye gaze tracking devices for locating points of gaze onto a screen e.g. onto a display unit of a computing device. According to the present invention, a computing device may for instance be a personal computer, a tablet, a laptop, a smart phone, a video game console, a camera, a head-mounted displays (HMD), a smart television, or the like.

Eye gaze tracking methods are widely used in Human Computer Interaction. computer programs implementing said methods are able to track the point of gaze of the user, which is thus able to provide inputs to a computing device without using conventional input devices (keyboards, mouse devices, touch pads, or the like) by simply looking at particular locations onto the display unit of the computing device. For instance, the user may provide inputs to a graphical user interface (GUI) of a computer without the need to use the hands, thereby e.g. enabling users with motor disabilities to successfully interact with a computer.

Methods for eye gaze tracking are also used in the assembly or maintenance of complex system. The operators performing such assembly or maintenance tasks often use HMDs and, in particular, augmented reality HMDs, which augment the operator's natural vision by means of computer graphics techniques. HMDs implementing eye gaze tracking methods can be hands-free controlled by the operators, which thus have both hands available for the task.

Eye gaze tracking methods are of importance in the automotive industry as well. For instance, these methods may be implemented in driving assistance systems, which are thus able to track the eye gaze of the driver to see whether he/she is paying attention to the road., e.g. whether he/she is looking through the windshield of the car. For instance, driving assistance systems implementing eye gaze tracking methods are able to detect whether the driver is looking at the screen of the vehicle rear view camera and to activate said camera only when needed, i.e. only when the driver looks at the screen.

Methods for eye gaze tracking may also allow for a hands-free interaction between the driver and the software of a vehicle, so that the former may give instructions to the latter without taking her/his hands off the wheel. The driver may thus instruct the software to perform specific activities, such as regulating the intensity of the vehicle lights, locking/unlocking the doors, controlling the vehicle speed and the like, by simply looking in specific directions.

Eye gaze tracking methods for locating points of gaze onto a screen are known in the art. Known eye gaze tracking methods may attain a relatively high accuracy only if they rely on dedicated hardware components, such as infrared (IR) cameras, wearable hardware components and eye tracking glasses, or on user-dependent calibration procedures. For instance, methods using IR cameras may reach an accuracy of the order of 0.5°. Such dedicated hardware components, however, are relatively expensive and are absent in mainstream computing devices such as laptops and smart phones. Moreover, wearable hardware components may be uncomfortable to use and hinder the mobility of the user. The calibration procedures, instead, are time consuming and limit the usability of the devices implementing known methods for eye gaze tracking and, in turn, their practical utility.

US 2019/212815 discloses a user trigger intent determining apparatus. Said apparatus obtains a first face image, obtains a second face image after a visual stimuli object is displayed and determines a final gaze location by correcting a first gaze location estimated from the first face image based on a second gaze location estimated from the second face image.

US 2020/043236 discloses a head-mounted display configured to project light, having different amounts of wavefront divergence, to an eye of a user to display virtual image content. The wavefront divergence may be changed in discrete steps, this change being triggered based upon whether the user is fixating on a particular depth plane.

The article *"Learning to Find Eye Region Landmarks for Remote Gaze Estimation in Unconstrained Settings"* by Seonwook Park *et al.* refers to a learning-based method for eye region landmark localization. According to this article, the detected landmarks are used as input to iterative model-fitting and learning-based gaze estimation methods.

The article *"MPIIGaze: Real-World Dataset and Deep Appearance-Based Gaze Estimation"* by Xucong Zhang *et al.* discloses a dataset, comprising 213,659 full face images and corresponding ground-truth gaze positions. Moreover, this article refers to a deep appearance-based gaze estimation method based on a VGG deep convolutional neural network.

In general, known eye gaze tracking methods suffer from limited accuracy under real-world operating conditions, e.g. in absence of dedicated hardware components and/or under conditions characterized by a relatively broad variability of the eye appearance, the illumination, the head pose, the technical specifications of the camera, the image quality, or the like.

These problems are at least partially solved by the invention of the present application, which relates to a computer-implemented method according to claim 1, to a device according to claim 14, to a computer program product according to claim 15, and to a computer-readable storage medium according to claim 16. Embodiments of the invention are subject matter of the dependent claims.

The present invention concerns a computer-implemented method for locating a first point of gaze onto a screen, the method comprising at least the steps of:

- initiating the acquiring of at least a first image;

- initiating the locating of a first face landmark location of a first face landmark in the first image

- initiating the locating of a second face landmark location of a second face landmark in the first image;

- initiating the selecting of a first region of interest in the first image, wherein the selecting of the first region of interest is performed by using at least the first face landmark location and the second face landmark location;

- initiating the constructing of a first gaze vector, wherein the constructing of the first gaze vector is performed by means of at least an artificial neural network, the artificial neural network using as input at least the first region of interest;

- initiating the locating the first point of gaze onto the screen, wherein the locating of the first point of gaze is performed by means of at least the first gaze vector and a Kalman filter, the Kalman filter using a series of estimations of the point of gaze on the screen.

All embodiments described herein that are according to the (present) invention, implicitly comprise all the features recited above that define the invention, even if not all features of the invention are explicitly recited again, when describing a certain aspect of the invention in more detail.

The screen may be a concave or a convex surface. In particular, the screen may be or a substantially flat surface, e.g. a panel such as a canvas, a glass panel and/or a windscreen of a vehicle. The screen may be a display unit of a computing device. For instance, the screen may be the monitor or the screen of a computing device, e.g. a substantially flat area of the computing device, on which a GUI and/or data, in particular data in the form of images, are displayed. The points on the screen may be expressed in terms of a two-dimensional screen coordinate in a two-dimensional reference frame defined onto the screen. The screen coordinate may in particular be cartesian or polar coordinates. For example, the screen location of a point of a screen is described by its two-dimensional screen coordinate, $(a, b)$, with respect to a screen reference frame centered at a point on the screen, e.g. at the upper left corner of the screen.

According to the present invention, an image may be a vector image or a two-dimensional grid of pixels, e.g. a rectangular grid of pixels. In particular, the location of a pixel in an image may be univocally determined in terms of its two-dimensional image coordinate in the image, said coordinates representing the location of said pixel in the two-dimensional grid of pixels. The two-dimensional image coordinate may be a cartesian or a polar coordinate with respect to a two-dimensional reference frame in the plane of the image, e.g. in the plane comprising the grid of pixels. For instance, the two-dimensional image coordinate of a pixel is the coordinate of the pixel in the image plane reference frame of the first image.

In particular, the first image is a first two-dimensional grid of pixels, e.g. a first rectangular grid of pixels. The entries of the first two-dimensional grid may be arranged in columns and rows, which may be numerated in ascending order in such a way that each column and each row are associated to a column number and a row number, respectively. In particular, location of each pixel in the first image may be univocally determined in terms of the row number, $y_R^{(1)}$, of the row to which the pixel belongs and of the column number, $y_R^{(1)}$, of the column to which the pixel belongs. Thus, the two-dimensional image coordinate of said pixel in the first image may be the two-dimensional vector $\left(x_R^{(1)},\ y_R^{(1)}\right)$. For instance, the two-dimensional image coordinate of a pixel of the first image is the coordinate of the pixel in the image plane reference frame of the first image.

An image, e.g. the first image, may be encoded by at least a bitmap. A bitmap encoding an image or a portion thereof may comprise, e.g. consist of, an array of bits that specifies the color of each pixel of said image or portion thereof. The bitmap may be palette-indexed so that the entries of the array are indexes onto a color table. The entries of the array may store the bits encoding the color of the pixel. In particular, a bitmap may comprise, e.g. consist of, a dot matrix data structure representing the two-dimensional grid of pixels. The bitmap may further comprise information concerning the number of bits per pixel, the number of pixels per row of the two-dimensional grid of pixels and/or the number of pixels per column of said rectangular grid. An image viewer may use the information encoded in the bitmap to render the image or the portion thereof on the screen of a computing device, e.g. of a computing device carrying out the method of the present invention.

An image, e.g. the first image, may be stored, in particular temporarily stored, in a primary and/or in a secondary memory of a computing device, e.g. of the computing device carrying out the method of the present invention. According the present invention, an image may be acquired by accessing the memory in which said image it is stored. Alternatively, or in conjunction with the above, the acquiring of an image may be performed by capturing said image by means of a recording device, e.g. a photo and/or a video recording device, such as a photo or a video camera. The photo recording device and/or a video recording device may be integrated in a computing device and in particular in a computing device carrying out the method of the present invention. The captured image may then be stored in the primary and/or secondary memory of the computing device and may be accessed to locate the face landmarks and/or to select regions of interest.

A face landmark is in particular a point in the shape of human faces which, typically, marks a distinctive anatomical region thereof. For instance, a face landmark can be tip of the nose, the right corner of the mouth or the left corner of the mouth. Similarly, a face landmark may be a point of an eyebrow or of a lip which, together with other landmarks, marks said eyebrow and said lip, respectively.

A face landmark may, for example, be an eye landmark. An eye landmark is in particular a point of an eye which, together with other eye landmarks, marks the shape of said eye. For example, an eye landmark may be the left or right corner of an eye, a point of the eyelid or the center of the eyeball. An eye landmark may be an iris landmark. In particular, an iris landmark is a point of the iris, which, together with other iris landmarks, marks the shape of said iris. For example, an iris landmark is the center of the iris.

The location in an image of a face landmark, e.g. the first and/or the second face landmark location is in particular the location in the image of the representation of said landmark in the image. For example, if in the image a facial landmark is represented by a set of pixels, the face landmark location may be the location in the image of a reference pixel of said set of pixels. This way, face landmark location is univocally expressed in terms of the location of this reference pixel, e.g. of the two-dimensional image coordinates thereof.

The locating of the first facial landmark and/or of the second facial landmark in the first image may be performed by means of the algorithm disclosed in the article *"One Millisecond Face Alignment with an Ensemble of Regression Trees"* authored by V. Kazemi *et al,* DOI: 10.1109/cvpr.2014.241, hereinafter referred to as "first location algorithm". Said algorithm comprises an ensemble of regression trees.

In particular, the first location algorithm allows for locating a set of $n_0$ face landmarks, said set comprising at least the first and the second landmark. For instance, $n_0$ is comprised between 2 and 194 and, in particular between 30 and 130. Moreover, $n_0$ may be comprised between 50 and 100 and, more particularly, is equal to either 6 or 68.

The three-dimensional location of a face landmark, e.g. of the eyeball center or the iris center, is the position of said landmark in the three-dimensional space. For instance, the three-dimensional location of a face landmark is described by a three-dimensional vector describing the three-dimensional coordinate of this landmark in the camera reference frame. In particular, said three-dimensional coordinate may be obtained from the two-dimensional image coordinate of the landmark in the image plane reference frame of the first image via the inverse of the camera matrix associated to the camera acquiring the first image.

The first region of interest (ROI) may comprise at least a first eye or a portion thereof. The first ROI is represented by a set of pixels of the first image. In particular, the first ROI is a two-dimensional grid of pixels of the first image and, more particularly, a rectangular grid of pixels of the first image. The first ROI may be encoded by at least a first bitmap.

For example, if the first face landmark is the tip of the nose and the second landmark is a point of the left eyebrow, the first ROI may consist of the pixels of the rows comprised between the row of the second landmark and the row of the first landmark. Moreover, if the first and the second face landmark are, respectively, the left and the right corner of the left eye, the first ROI may consist of the pixels with column number comprised in the interval between the integer number $C_1 = C_{FL1}$-E and the integer number $C_2 = C_{FL2} + E$, wherein $C_{FL1}$ and $C_{FL2}$ are the column number of the first and of the second face landmark, respectively. For instance, E is a number comprised in the interval between 5 and 15 and, in particular, in the interval between 8 and 12. More particularly, the integer number $E$ may be equal to 10.

The location of a pixel in the first ROI may be univocally determined in terms of two-dimensional coordinates, which represents the location of said pixel in the two-dimensional grid of pixels representing the first ROI. Moreover, the location of a pixel in the first two-dimensional grid may be expressed in terms of cartesian or polar coordinates with respect to a two-dimensional reference frame in the plane of the first image.

The selecting of the first ROI may comprise storing information about the first ROI. The information about the first ROI may comprise information about the color of the pixels of the first ROI and the location of said pixels in the first ROI. The information about the first ROI is in particular comprised in the first bitmap. The selecting of the first ROI may comprise storing data comprising the memory address of the bits storing the information about the first ROI. For instance, said bits may be arranged in the bitmap encoding the first image. Said data and/or the information about the first ROI may be stored, e.g. temporarily stored, in the primary and/or secondary memory of a computing device, e.g. of the computing device carrying out the method of the present invention.

Any structure format may be used to encode the information about the first ROI, insofar that said information may be retrieved and interpreted correctly. For example, the information about the location of the pixels of the first ROI may specify the location of some of the pixels comprised in the first ROI, insofar that said information is sufficient to correctly obtain the location of each of the pixels of the first ROI. For example, if the first ROI is a rectangular grid of the first image, the information about the location of the vertices of said grid is sufficient to obtain the location of each of the pixels of the first ROI.

In particular, the first gaze vector estimates the three-dimensional direction, in which the eye contained in the first ROI is looking. The first gaze vector may be a three-dimensional unit vector, which may be expressed in cartesian, spherical or cylindrical coordinates. For example, the first gaze vector may be expressed in spherical coordinates with respect to the three-dimensional location of the eyeball center or of the iris center of the eye contained in the first ROI. In this case, the first gaze vector may be expressed in terms of a polar angle and an azimuthal angle.

In particular, the artificial neural network (ANN) is a computational model that maps an ANN input into an ANN output and that comprises a plurality of interconnected nodes, each node mapping an input into an output. In particular, the nodes of the ANN are interconnected to one another so that, for each node, the input of said each node comprises the output of another node and/or the output of said each node is part of the input of another node. For example, the output of a generic node of the ANN is part of the ANN output and/or of the input of another node. In particular, the node input of a generic node of the ANN comprises one or more data items, each data item being either the output of another node or a data item of the ANN input.

For instance, each node of the ANN may map its input to its output by means of an activation function which may be node-dependent. Typically, the activation function of a node may depend on one or more weights weighting the data items of the input of said node.

In particular, the output of a node of the ANN may depend on a threshold. For instance, the output of a node depends on whetherthe value of the activation function evaluated at the input of said node is greater than, equal to, or lower than the threshold.

For example, the ANN may be a VGG-16 neural network or a MnistNet neural network. The ANN may be a convolutional neural network such as AlexNet. For example, the ANN may be part of a generative adversarial network.

The values of the weights of the ANN may be obtained by training the ANN by means of at least a training dataset. During training, the values of the weights are iteratively adjusted so as to minimize the value of a cost function which, typically, depends on the weights of the ANN, the ANN inputs, the ANN outputs, and/or the biases. For example, the training dataset may be the MPIIGaze or the Gaze-capture dataset or a synthetic dataset such as the SynthesEyes dataset or the UnityEyes dataset.

The performances of the ANN may be improved by using data augmentation during training. For example, the training dataset may be expanded by augmenting at least some of its data. Data augmentation may be performed by translating, rotating, and/or at least some of the images comprised in the training dataset. At least some of the images of the training dataset may be augmented by varying their intensity and/or by adding lines or obstructions thereto.

The ANN input may include information about a plurality of pixels of an input image or a portion thereof. For example, the ANN input includes information about the position and the color of said pixels. In particular, the information about the position of the pixels may be encoded in the two-dimensional coordinates of the pixels with respect to a two-dimensional reference frame in the plane of the input image.

When constructing of the first gaze vector, the ANN uses as input the first ROI. In this case, in particular, the ANN input comprises information about the position and the color of the pixels of the first ROI and, more particularly, the ANN input may comprise or consist of the first bitmap. The ANN output may comprise information characterising the first gaze vector, e.g. the spherical, cylindrical or cartesian coordinates thereof. In this case, the ANN constructs the first gaze vector.

The three-dimensional location of the first point of gaze, is in particular the intersection between the screen and a first gaze line. The first gaze line is in particular the line that intersects the three-dimensional location of the eyeball center or of the iris center of the eye contained in the first ROI and that is parallel to the first gaze vector. The locating of the first point of gaze onto the screen may be obtained by modelling the screen in terms of a plane (hereinafter also referred to as: "screen plane") and by constructing the first point of gaze as the intersection between said plane and the first gaze line. For example, the three-dimensional coordinate, $\vec{P}_1$, of the location of the first point of gaze in a given reference frame (e.g. the camera reference frame) is given by:

$$\vec{P}_1 = \vec{g}_0 + \vec{g}_1 \frac{(\vec{P}_R - \vec{g}_0) \cdot \vec{n}}{\vec{g}_1 \cdot \vec{n}}, \qquad (1)$$

wherein, $\vec{g}_1$ is the first gaze vector and $\vec{g}_0$ is the three-dimensional coordinate of the three-dimensional location of the eyeball center or of the iris center of the eye contained in the first ROI. The unit vector $\vec{n}$ is perpendicular to the screen plane and $\vec{P}_R$ are the three-dimensional coordinate of the three-dimensional location of a reference point of the screen plane. For instance, this reference point may be the upper left corner of the screen.

The three-dimensional coordinate, $\vec{Q}_1$, of the first point of gaze with respect to a three-dimensional reference frame centered at the reference point of the screen plane is given by $\overline{Q}_1 = \overline{P}_1 - \overline{P}_R$. The screen coordinate with respect to the reference point of the screen may be obtained by appropriately rotating the reference frame centered at the reference point to obtain a further three-dimensional reference frame. In the further three-dimensional reference frame, the three-dimensional coordinate of the first point of gaze is given by $(\tilde{a}, \tilde{b}, 0)$, where $(\tilde{a}, \tilde{b})$ is the two-dimensional screen coordinate of the first point of gaze with respect to a screen reference frame centered at the reference point of the screen.

The screen coordinates are typically expressed in unit of lengths such as centimeters and may also be converted in unit of pixels:

$$\begin{pmatrix} \tilde{a}' \\ \tilde{b}' \end{pmatrix} = \begin{pmatrix} \tilde{a} \\ \tilde{b} \end{pmatrix} \times \frac{\text{screen pixel size}}{\text{screen physical size}}. \qquad (2)$$

The selecting of the first ROI improves the selection of the input for the ANN thereby leading to a more accurate gaze vector construction and reducing the processing load of the ANN. The selecting of the first ROI and the constructing of the first gaze vector by means of the ANN synergistically interact with one another to improve the accuracy of the method under real-world operating conditions and, in particular, in absence of dedicated hardware components. The method of the present invention may achieve an accuracy below 1° under a wide spectrum of operating conditions.

According to an embodiment of the method of the present invention, the artificial neural network detects in the first ROI at least a first eye landmark location of a first eye landmark and a second eye landmark location of a second eye landmark. In particular, the eye landmarks detected by the ANN at the step of constructing the first gaze vector allow for reconstructing the eye depicted in the first ROI.

In particular, the first and the second eye landmark are, respectively, the eyeball center and the iris center of the eye contained in the first ROI. The three-dimensional coordinate of the eyeball center in the camera reference frame (hereinafter also referred to as: "the eyeball coordinate") may be constructed from the two-dimensional image coordinate of the first eye landmark location in the first ROI by means of the camera matrix of the camera acquiring the first image. Similarly, the three-dimensional coordinate of the iris center in the camera reference frame (hereinafter also referred to as: "the iris coordinate") may be constructed from the two-dimensional image coordinate the second eye landmark location in the first ROI by means of the aforementioned camera matrix. In particular, the first gaze vector may be constructed as the difference between the iris coordinate and the eyeball coordinate.

In this case, the first gaze vector may be constructed by using basic algebraic operations manipulating two landmark locations. This way, the complexity of the ANN may be reduced and the computational load of the method is decreased.

For example, in this embodiment, the ANN output comprises information about the first and of the second eye landmark in the first image and/or in the first ROI. In particular, the ANN output comprises the two-dimensional image coordinate of the first eye landmark and of the second eye landmark in the first image and/or the first ROI.

The ANN output may comprise at least a heatmap associated to an eye landmark. In particular, a heatmap associated to an eye landmark is an image that represents the per-pixel confidence of the location of said landmark by using the colors of its pixel. In particular, the pixels of the heatmap are in correspondence with the pixels of the first ROI and/or the first image. For example, this correspondence may be implemented by using a mapping function, e.g. an isomorphism, that maps each pixel of the heatmap onto a pixel of the first ROI and/or the first image.

The color of a pixel of a heatmap encodes information about the probability that the eye landmark associated to the heatmap is located at the pixel of the first ROI that corresponds to said pixel of the heatmap.

In particular, a pixel of a heatmap associated to an eye landmark encodes the per-pixel confidence, e.g. the likelihood or the probability, that said landmark is located at the pixel of the first ROI, that is associated to said pixel of the heatmap. For example, the darker is the pixel of the heatmap, the more likely is that the eye landmark is located at the pixel of the first ROI, that corresponds to said pixel of the heatmap.

For example, the location in the first ROI of an eye landmark may be the location of the pixel of the first ROI, that correspond to a pixel in a first region of the heatmap associated thereto. In particular, the first region is the region of the heatmap, in which the eye landmark is most likely to be located, e.g. in which the per-pixel confidence assumes its greatest values. In this case, in particular, the the location in the first ROI of said eye landmark is detecting by using the pixel in the first region of the heatmap associated to the landmark and the mapping function described above.

In one embodiment of the invention, the ANN further detects in the first ROI at least eight eye border landmark locations, ranging from first to eighth eye border landmark location. In particular, an eye border landmark is a point of the external border of an eye, e.g. of an eyelid or of an eye corner.

In a further embodiment of the method of the invention, the ANN detects in the first ROI at least eight iris border landmark locations, ranging from first to eighth iris border landmark location. For instance, an iris border landmark is a point of the limbus of the eye, i.e. of the iris-sclera border.

For example, the ANN output comprises the first heatmap, the second heatmap and sixteen further heatmaps, ranging from third to eighteenth. In particular, each of the third to tenth heatmaps encodes the per-pixel confidence of the location of one of the first to eighth eye border landmark, in such a way that different eye border landmarks are associated to different heatmaps. Moreover, each of the eleventh to eighteenth heatmaps may encode the per-pixel confidence location of one of the first to eighth iris border landmark, in such a way that different iris border landmarks are associated to different heatmaps.

The location in the first ROI of the iris center, of the eyeball center, of the eight eye border landmarks, and of the eight iris border landmarks may be obtained by processing the aforementioned eighteen heatmaps by means of a soft-argmax layer.

For example, the ANN may be trained by using the following cost function:

$$F(IN) = \lambda \sum_{j=1}^{N_h} \sum_{s} \left( \widehat{M}_j(s) - M_j(s) \right)^2, \qquad (3)$$

wherein $M_j(s)$ is the value at pixel $s$ of the $j^{th}$ heatmap, as computed by the ANN by using as input the training ANN input IN of the training dataset. $\widehat{M}_j(s)$ is the value of the ground-truth $j^{th}$ heatmap associated to the training ANN input IN. The scale factor $\lambda$ is comprised between 0.1 and 10, in particular between 0.5 and 5. More particularly, the factor $\lambda$ is equal to 1. For instance, $N_h$ may be comprised between 1 and 20 and, more particularly, may be equal to 2 or 18.

According to another embodiment of the present invention, the constructing of the gaze vector is performed by means of a support vector regression (SVR) algorithm, the SVR algorithm using as input at least the first eye landmark location and the second eye landmark location. This, in particular, allows for improving the accuracy of the point of gaze location, without having to rely on models of the eye eyeball.

The SVR algorithm may allow for constructing the first gaze vector by estimating the eyeball pitch and yaw and/or the polar and azimuthal angles of the spherical coordinates of the first gaze vector. In particular, the SVR algorithm uses as input a feature vector comprising the first eye landmark location and the second eye landmark location. The feature vector may further comprise the eight iris border landmark locations and the eight eye border landmark locations.

The feature vector may also comprise a two-dimensional gaze vector prior, which may be the vector that connects the eyeball center location in the first image or the first ROI to the iris center location in the first image or the first ROI and which is directed towards the latter location. The presence of the gaze vector prior increases significantly the accuracy of the SVR algorithm, in particular if said algorithm is trained by using a relatively small number of training samples, e.g. about twenty training samples.

In order to improve the accuracy of the gaze estimation, at least a component of the feature vector, e.g. each of its components, may be normalized to the eye width, i.e. to the distance between the left corner location and the right corner location of the eye contained in the first image or the first ROI. Moreover, the face landmark locations comprised in the feature vector and, if present, the two-dimensional gaze vector prior may be expressed in cartesian or polar coordinates with respect to a two-dimensional reference frame in the plane of the first image, the origin of said reference frame being the eyeball center location.

The SVR algorithm may be trained in a user-independent way by using a relatively large set of training feature vectors obtained from images containing different persons. The SVR algorithm may also be trained in a user-dependent way by using a relatively small set of training feature vectors obtained from training images containing a specific user. For instance, the training images and the corresponding training feature vectors may be obtained by asking the user to look at predetermined locations on the screen and, while the user look at these locations, by acquiring (e.g. capturing) images depicting the user's face.

In one embodiment of the method according to the present invention, the artificial neural network is an hourglass neural network (HANN).

The HANN allows for gathering information across different scales of the input image or of the portions thereof. In particular, the HANN comprises one or more hourglass modules mapping input features to output features. In particular, the hourglass modules are stacked in series, so that the output features of an hourglass module constitute the input features of another hourglass module. The nodes of the hourglass modules are arranged in layers and are configured in such a way that convolutional and max pooling layers modify the input features by decreasing the resolution. At each max pooling step, the modules branch off and apply further convolutions at the original prepooled resolution. After reaching the minimal resolution, the hourglass module increases the resolution by upsampling and by combining features across the scales.

Typically reserved to human pose estimation, the use of Hourglass artificial neural networks in gaze vectors construction leads to a surprising improvement of the accuracy of the location the first point of gaze onto the screen.

According to a further embodiment of the invention, the first face landmark is a third eye landmark and/or the second face landmark is a fourth eye landmark. In this case the first and the second face landmark location are a third and a fourth eye landmark location, respectively.

The detection of two eyes landmarks allows for improving the accuracy of the selection of the first ROI, thereby improving the quality of the input fed to the input of the ANN and, ultimately, the accuracy of the construction of the first gaze vector.

A further embodiment of the method of the present invention comprises the step of initiating the locating in the first image of a fifth eye landmark location of a fifth eye landmark, of a sixth eye landmark location of a sixth eye landmark, of a seventh eye landmark location of a seventh eye landmark, and of an eighth eye landmark location of a eighth eye landmark. In this embodiment, the selecting of the first ROI is performed by using the third, fourth, fifth, sixth, seventh, and eight eye landmark location.

In this case, for example, the first ROI may consist of the pixels with column number comprised between the integer numbers $C_3$ and $C_4$, and with row number comprised between the integer numbers $R_3$ and $R_4$, wherein $C_3$, $C_4$, $R_3$ and $R_4$ fulfil the following relations:

$$C_3 = \min(S_{e,x}) - E; \quad C_4 = \max(S_{e,x}) + E; \quad R_3 = \min(S_{e,y}) - E; \quad R_4 = \max(S_{e,y}) + E, \quad (4)$$

with $S_{e,x} = \{x_{e,3}, x_{e,4}, x_{e,5}, x_{e,6}, x_{e,7}, x_{e,8}\}$ and $S_{e,y} = \{y_{e,3}, y_{e,4}, y_{e,5}, y_{e,6}, y_{e,7}, y_{e,8}\}$. The coordinates $(x_{e,3}, y_{e,3})$, $(x_{e,4}, y_{e,4})$, $(x_{e,5}, y_{e,5})$, $(x_{e,6}, y_{e,6})$, $(x_{e,7}, y_{e,7})$, and $(x_{e,8}, y_{e,8})$, denote the two-dimensional image coordinates of the six eye landmark locations used to select the first ROI. The expression min(S) and max(S) denote the minimum and the maximum of the generic set $S$, respectively.

Surprisingly, the selecting of the first ROI by means of six eye landmark locations leads to an improvement of the accuracy of the constructing of the first gaze vector by means of the ANN.

One embodiment of the method of the present invention further comprises the step of:

- initiating the constructing of a head pose estimation vector, wherein the constructing of the head pose estimation vector is performed by using at least the first face landmark location and the second face landmark location;

wherein the locating of the first point of gaze onto the screen is based on the head pose estimation vector.

The head pose estimation vector is in particular a vector that comprises at least the information needed to compute the yaw, pitch, and roll of the face contained in the first image with respect to a reference face position.

The three-dimensional location, $\vec{g}_0$, of the eyeball center or of the iris center of the eye contained in the first ROI may be equal to the head pose estimation vector, $\vec{h}_0$. In particular, the head pose estimation vector reads as follows:

$$\vec{h}_0 = \Theta_3 \, \vec{v}_0 + \vec{\tau} \qquad (5)$$

where $\Theta_3$ and $\vec{\tau}$ are, respectively, the 3x3 rotation matrix and the translation vector that transform the three-dimensional coordinates in a three-dimensional world reference frame into the three-dimensional coordinates in the three-dimensional camera reference frame. For example, if the location of the eye center or of the iris center of the first eye in the first image is described by the two-dimensional image coordinates $(x_0, y_0)$, the three-dimensional vector $\vec{v}_0$ reads as follows:

$$\vec{v}_0 = C^{-1} \begin{pmatrix} x_0 \\ y_0 \\ 1 \end{pmatrix}, \qquad C = \begin{pmatrix} f_x & 0 & c_x \\ 0 & f_y & c_y \\ 0 & 0 & 1 \end{pmatrix}, \qquad (6)$$

in terms of the inverse of the camera matrix $C$. $f_x$ and $f_y$ are the focal lengths in the $x$ and $y$ directions, respectively, and $(c_x, c_y)$ is the optical center. The constant s is an overall scale. The rotation matrix $\Theta_3$, the translation vector $\vec{\tau}$ and/or the overall scale s may in particular be computed by solving the Perspective-n-Point (PnP) problem. The PnP problem may be formulated as the problem of estimating the pose of a face contained in the first image, given the three-dimensional coordinate in the world reference frame and the two-dimensional image coordinate of each face landmark of a set of $n_1$ face landmarks of said face.

The set of $n_1$ face landmarks comprises the first and the second face landmark. For instance, $n_1$ is comprised between 2 and 80 and, in particular between 3 and 75. Moreover, $n_1$ may be comprised between 4 and 70 and, more particularly, is equal to either 6 or 68. For example, the set of $n_1$ face landmarks is a subset of the set of $n_0$ face landmarks

and, in particular the set of $n_0$ face landmarks coincides with the set of $n_1$ face landmarks.

The solution of the PnP problem may be obtained by using the P3P method, the efficient PnP (EPnP) method, the Direct Least-Squares (DLS) Method. These methods, in particular the P3P one, may be complemented by the Random sample consensus (RANSAC) algorithm, which is an iterative method to improve the parameters estimation from a set of data that contains outliers.

In particular, the rotation matrix $\Theta_3$, the translation vector $\vec{\tau}$ and/or the overall scale $s$ may be computed by using the direct linear transformation and/or the Levenberg-Marquardt optimization.

The constructing of the head pose estimation vector allows for improving the accuracy of the location of the first point of gaze under real-world, unconstrained operating conditions, e.g. without forcing the user to assume a given predetermined position with respect to the screen and/or the recording device.

In another embodiment of the method according to the present invention, the constructing of the head pose estimation vector is performed at least by means of a three-dimensional face model. The three-dimensional face model uses as input at least the first face landmark location and the second face landmark location.

In particular, the three-dimensional face model may use as input the location in the first image of each face landmark of a set of $n_2$ face landmark, the set of $n_2$ face landmarks comprising the first and the second face landmark. For instance, $n_2$ is comprised between 2 and 80 and, in particular between 3 and 75. Moreover, $n_2$ may be comprised between 4 and 70 and, more particularly, is equal to either 6 or 68. For instance, the set of $n_2$ face landmarks is a subset of the set of $n_1$ face landmarks and, in particular the set of $n_1$ face landmarks coincides with the set of $n_2$ face landmarks.

The three-dimensional model is in particular an algorithm that allows for computing the three-dimensional coordinate of each element of the set of $n_2$ face landmarks by using as input at least the face landmark location, in particular the two-dimensional image coordinate, of the elements of the set of $n_2$ face landmarks. The three-dimensional face landmark model may in particular be the Surrey face model or the Candide face model.

In particular, the three-dimensional face model allows for estimating the rotation matrix $\Theta_3$ and the translation vector $\overline{\tau}$, that, ultimately, allow for computing the head pose estimation vector e.g. by using equations (5) and (6).

For example, if the location in the first image of the generic $j^{th}$ element of the set of $n_2$ face landmarks is described by the coordinate $(x_{f,j}, y_{f,j})$, the three-dimensional model allows for estimating the three-dimensional location, $\overline{P}_{f,j}$, of said generic element in the three-dimensional world reference frame. In this case, in particular, the rotation matrix $\Theta_3$, the translation vector $\overline{\tau}$ and/or the overall scale sare computed by solving the system:

$$
\begin{cases}
\vec{P}_{f,1} = s\,\Theta_3\,C^{-1} \begin{pmatrix} x_{f,1} \\ y_{f,1} \\ 1 \end{pmatrix} + \vec{\tau} \\[2ex]
\vec{P}_{f,2} = s\,\Theta_3\,C^{-1} \begin{pmatrix} x_{f,2} \\ y_{f,2} \\ 1 \end{pmatrix} + \vec{\tau} \\[2ex]
\quad\quad\quad \vdots \\[1ex]
\vec{P}_{f,n_2} = s\,\Theta_3\,C^{-1} \begin{pmatrix} x_{f,n_2} \\ y_{f,n_2} \\ 1 \end{pmatrix} + \vec{\tau}
\end{cases}
\tag{7}
$$

The use of a three-dimensional model allows for a reliable construction of the head pose estimation vector from a relatively small amount of landmark locations, thereby reducing the processing load of the method of the present invention.

An embodiment of the method according to the present invention comprises the steps of:

- initiating the acquiring of at least a second image;

- initiating the locating of a third face landmark location of the first face landmark in the second image;

- initiating the estimating of a fourth face landmark location of the first face landmark in the first image, wherein the estimating of the fourth face landmark location is performed by means of an optical flow equation and of the third face landmark location; and

- initiating the detecting of a fifth face landmark location of the first face landmark in the first image.

The locating of the first face landmark location in the first image is based on the fourth face landmark location and on the fifth face landmark location.

The locating of the first face landmark location in the first image may comprise the computing the midpoint of the segment connecting the fourth face landmark location and the fifth face landmark location. In particular, the first face landmark location substantially corresponds to the midpoint of the segment connecting the fourth face landmark location and the fifth face landmark location.

For example, the second image is a vector image or a second two-dimensional grid of pixels, e.g. a rectangular grid of pixels. Moreover, the second image may be encoded by at least a bitmap.

The entries of the second two-dimensional grid may be arranged in columns and rows, which may be numerated in ascending order in such a way that each column and each row are associated to a column number and a row number, respectively. In particular, the location of a pixel of the second image may be univocally determined in terms of the row number, $y_R^{(2)}$, of the row to which the pixel belongs and of the column number, $x_R^{(2)}$, of the column to which the pixel belongs. Thus, the two-dimensional image coordinate of said pixel in the second image may be the two-dimensional vector $\left( x_R^{(2)}, y_R^{(2)} \right)$. For instance, the two-dimensional image coordinate of a pixel of the second image is the coordinate of the pixel in the image plane reference frame of the second image.

The first image and the second image are, in particular, images comprising the same face captured at different time instants. In particular, the first and the second image may be two frames of a video, which, for instance, is acquired by the recording device.

In particular, the time instant, $t_1$, at which the first image is captured, and the time instant, $t_2$, at which the second image is captured fulfil the equation $(t_1 - t_2) = \Delta_t$. For example, $\Delta_t$ is comprised in the interval between 0.02 and 0.07 s, in particular, comprised in the interval between 0.025 and 0.06 s and, more particularly, in the interval between 0.03 and 0.05 s. For example, $\Delta_t$ may be equal to 0.04 s.

Moreover, if the recording device is operated to capture images with frequency v, $\Delta_t$ fulfils the equation $\Delta_t = N_t/\upsilon$. The integer number $N_t$ may be comprised in the interval between 1 and 5 and in particular in the interval between 1 and 3. More particularly, the integer number $N_t$ may be equal to 1, i.e. the first image is immediately consecutive to the second image. The frequency $v$ may be comprised in the interval between 15 and 40 Hz, in particular in the interval between 20 and 35 Hz and, more particularly, in the interval between 25 and 30 Hz. For example, the frequency $v$ may be equal to 27 Hz.

The two-dimensional reference frame in the plane of the second image and the one in the plane the first image may be defined in such a way that the first and the second image form a voxel, e.g. a three-dimensional grid of pixels comprising a first and a second layer. In this case, the first and second layer of pixels are the first and second rectangular grid, respectively.

The location of the pixels in the voxel may be expressed in terms of a three-dimensional voxel coordinates, $(x, y, t)$, wherein the coordinate $(x, y)$ is the two-dimensional coordinate of the pixel in the two-dimensional reference frame of the layer, to which the pixel belongs. The temporal coordinate, $t$, specifies the layer, to which the pixel belongs. In particular, if $t = t_1$ or $t = t_2$, the pixel belongs to the first or the second layer, respectively.

The location of a face landmark in the first and/or in the second image may be expressed in terms of the location the corresponding reference pixel in the voxel. In particular, the location of said face landmark may be expressed by the three-dimensional voxel coordinate, $(x, y, t)$ of the reference pixel. In particular, the temporal coordinate of a face landmark location in the first image is $t_1$ and the temporal coordinate of a face landmark location in the second image is $t_2$.

For example, the method for constructing the point of gaze onto the screen is performed several times during an operational time interval of the device implementing the method of the invention. In particular, the operational time interval is the interval during which the construction of the point of gaze is deemed important e.g. to allow for a hands-free human-machine interaction. In this case, in particular, the second image is acquired at instant $t_2$ and used to locate the third face landmark location to ultimately compute a point of gaze onto the screen by means of the method of the present invention. The information of the third face landmark location may then be used to obtain the first landmark location in the first image by means of the optical flow equation.

In particular, the voxel coordinate of the fourth face landmark location in the first image, $(x_4, y_4, t_1)$, fulfil the following equation:

$$\begin{pmatrix} x_4 \\ y_4 \\ t_1 \end{pmatrix} = \begin{pmatrix} x_3 \\ y_3 \\ t_2 \end{pmatrix} + \Delta_t \begin{pmatrix} v_{x,3} \\ v_{y,3} \\ 1 \end{pmatrix}, \qquad (8)$$

wherein $(x_3, y_3, t_2)$ is the voxel coordinate of the location of the third face landmark in the second image. The velocity vector $(v_{x,3}, v_{y,3})$ represents the velocity of the third face landmark location in the second image. The velocity vector may be obtained by using the optical flow equation, according to which a pixel at the voxel location $(x, y, t)$ and moving with velocity $(v_x, v_y)$ fulfils the following constraint:

$$I_x(x, y, t)\, v_x \; + \; I_y(x, y, t)\, v_y = \; - I_t(x, y, t). \qquad (9)$$

$I(x, y, t)$ is the intensity at the voxel position $(x, y, t)$. $I_x$, $I_y$ and $I_t$ are, respectively, the derivatives of the intensity with respect to $x$, $y$ and $t$. Said derivatives are in particular evaluated at the voxel location $(x, y, t)$. In particular, the optical flow equation at the location of the third face landmark in the second image reads as follows:

$$I_x(x_3, y_3, t_1)\, v_{x,3} \; + \; I_y(x_3, y_3, t_1)\, v_{y,3} = \; - I_t(x_3, y_3, t_1). \qquad (10)$$

In particular, the optical flow equation allows for predicting the change of the location of the first face landmark in the scene during the time interval from the instant $t_2$ to the instant $t_1$ Thus, the fourth face landmark location is an estimate of the location of the first face landmark in the first image, based on location of the first face landmark in the second image.

Equations (9) and (10) may be used to compute the velocity vector $(v_{x,3}, v_{y,3})$ by using the Lucas-Kanade method. In particular, the method accordingto the present invention may comprise the step of initiating the locating of a plurality of pixel locations in the second image. In particular, the distance, e.g. the Euclidean distance, between each of the plurality of pixel locations and the location of the third face landmark in the second image is less than or equal to an upper distance, $d_U$. If the method locates P pixel locations with voxel coordinates $(x_{p,1}, y_{p,1}, t_1)$, $(x_{p,2}, y_{p,2}, t_1)$, ..., $(x_{p,P}, y_{p,P}, t_1)$, the velocity vector $(v_{x,3}, v_{y,3})$ may be computed by solving the following system:

$$- \begin{pmatrix} I_t(x_3, y_3, t_1) \\ I_t(x_{p,1}, y_{p,1}, t_1) \\ I_t(x_{p,2}, y_{p,2}, t_1) \\ \vdots \\ I_t(x_{p,P}, y_{p,P}, t_1) \end{pmatrix} = \begin{bmatrix} I_x(x_3, y_3, t_1) & (x_3, y_3, t_1) \\ I_x(x_{p,1}, y_{p,1}, t_1) & I_y(x_{p,1}, y_{p,1}, t_1) \\ I_x(x_{p,2}, y_{p,2}, t_1) & I_y(x_{p,2}, y_{p,2}, t_1) \\ \vdots & \vdots \\ I_x(x_{p,P}, y_{p,P}, t_1) & I_y(x_{p,P}, y_{p,P}, t_1) \end{bmatrix} \begin{pmatrix} v_{x,3} \\ v_{y,3} \end{pmatrix} \qquad (11)$$

The system of equations (11) may be solved by using the least squares approach. Moreover, the following relations may be fulfilled:

$$\begin{cases} \sqrt{(x_{p,1} - x_3)^2 + (y_{p,1} - y_3)^2} \le d_U \\ \sqrt{(x_{p,2} - x_3)^2 + (y_{p,2} - y_3)^2} \le d_U \\ \qquad\qquad \vdots \\ \sqrt{(x_{p,P} - x_3)^2 + (y_{p,P} - y_3)^2} \le d_U \end{cases} \qquad (12)$$

The upper distance may be expressed in unit of pixels and may be comprised in the interval between 1 and 10 pixels, in particular in the interval between 2 and 8 pixels. For instance, the upper distance may be comprised in the interval between 3 and 6 pixels and, in particular, may be equal to 3 or 4 pixels.

The invention may comprise the step of initiating the locating of a first pixel location in the second image. In particular, the distance, e.g. the Euclidean distance, between the first pixel location and the third face landmark location in the second image is less than or equal to the upperdistance. According to the Lucas-Kanade method, the velocity vector $(v_{x,3}, v_{y,3})$ may be computed by using equation (11) with P = 1, wherein $(x_{p,1}, y_{p,1}, t_1)$ are the voxel coordinates of the first pixel location.

For example, the locating of the third facial landmark location in the second image may be obtained by means of the first location algorithm. Moreover, the detecting of the fifth face landmark location of the first face landmark in the first image may be performed by locating said landmark location in the first image e.g. by means of the first location algorithm.

In this embodiment, the location of the first face landmark in the first image is improved by consistently including information about its previous location, i.e. about the location of said landmark in the second image. This way, the use of the information gathered during the operational time interval of the device is, at least partially, optimised.

In another embodiment of the present invention, the first face landmark location is equal to the weighted average between the fourth face landmark location and the fifth face landmark location.

In particular, the weighted average comprises a first weight, $w_1$, and a second weight, $w_2$, the first and the second weight multiplying the fourth and the fifth face landmark location, respectively. The weighted average may be expressed in terms of the voxel coordinate as follows:

$$\begin{pmatrix} x_1 \\ y_1 \end{pmatrix} = w_1 \begin{pmatrix} x_4 \\ y_4 \end{pmatrix} + w_2 \begin{pmatrix} x_5 \\ y_5 \end{pmatrix}, \qquad \text{with } (w_1 + w_2) = 1, \qquad (13)$$

wherein $(x_1, y_1, t_1)$ and $(x_5, y_5, t_1)$ are respectively the voxel coordinate of the first and the fifth face landmark location in the first image. In particular, the first face landmark location is the midpoint between the fourth and the fifth face landmark location and thus its coordinate may be obtained by using equation (13) with $w_1 = w_2 = 1/2$.

In particular, in this embodiment, the accuracy of the locating of the first face landmark location in the first image may be improved if the value of the weights $w_1$ and $w_2$ is based on the accuracy of the locating of the third and the fifth face landmark location. For instance, if the locating of the third face landmark location in the second image is more accurate than the locating of the fifth face landmark location in the first image, the first weight may be greater than the second weight. If, instead, the locating of the third face landmark location in the second image is less accurate than the one of the fifth face landmark location in the first image, the first weight may be smaller than the second weight. The accuracy of the locating of a face landmark location in an image may in particular depend on the pitch, yaw and roll of the face depicted in the image.

According to an embodiment of the present invention, the locating of the first face landmark location in the first image is based on a landmark distance, the landmark distance being the distance between the third face landmark location and the fourth face landmark location.

In particular, the landmark distance, $d_L$, is the Euclidean distance between the third face landmark location and the fourth face landmark location. The landmark distance may be expressed in units of pixels and/or may read as follows,

$$d_L = \sqrt{(x_4 - x_3)^2 + (y_4 - y_3)^2} \ .$$

In a further embodiment of the present invention, the first weight is a monotonically decreasing function of the landmark distance and the second weight is a monotonically increasing function of the landmark distance.

According to this embodiment, the contribution of the fourth face landmark location to the weighted sum becomes more marginal as the landmark distance increases. This way, the accuracy of the locating of the first face landmark location in the first image is improved, since the accuracy of the location of the fourth face landmark, which is an estimate of the location of the first face landmark obtained by using the third face landmark location, decreases as the landmark distance decreases.

According to the preset invention, a monotonically increasing function of a distance, e.g. of the landmark distance, is in particular a function that does not decrease as said distance increases. A monotonically decreasing function of a distance, e.g. of the landmark distance, instead, is in particular a function that does not increase as distance decreases.

For example, the first and the second weight read as follows:

$$\begin{cases} w_2 = \dfrac{\min(d_{L,0}, d_L)}{d_{L,0}}, \\ w_1 = 1 - w_2 \end{cases} \qquad (14)$$

wherein $\min(d_{L,0}, d_L)$ denotes the minimum between $d_{L,0}$ and $d_L$. $d_{L,0}$ may be expressed in unit of pixels and/or may be comprised in the interval between 1 and 10 pixels. In particular, $d_{L,0}$ is comprised in the interval between 3 and 7 pixels and, more particularly, $d_{L,0}$ is equal to 5 pixels.

An embodiment of the method of the present invention comprises the step of:

- initiating the locating of a second point of gaze onto the screen, wherein the locating of the second point of gaze is performed by means of at least the first gaze vector;

In this embodiment, the locating of the first point of gaze onto the screen is performed by means of the second point of gaze.

The second point of gaze is in particular the intersection between the screen and the first gaze line. The locating of the second point of gaze onto the screen may be obtained by modelling the screen in terms of a plane and by constructing the second point of gaze as the intersection between said plane and the first gaze line.

In this case, in particular, the location of the first point of gaze onto the screen may depend only indirectly on the first gaze vector, that is only via the dependency of the location of the second point of gaze on the first gaze vector.

In an embodiment of the present invention, the locating of the second point of gaze onto the screen is performed by means of a calibration function. The calibration function depends on at least a location of a first calibration point of gaze and on an estimate of the location of the first calibration point of gaze.

In particular, the calibration function, $\varphi$, allows for computing the two-dimensional screen coordinates, $(\tilde{a}, \tilde{b})$, of the first point of gaze onto the screen from the two-dimensional screen coordinates, $(a, \tilde{b})$, of the second point of gaze onto the screen,

$$\begin{pmatrix} \tilde{a}, \\ \tilde{b} \end{pmatrix} = \varphi \left( \begin{pmatrix} \tilde{\tilde{a}} \\ \tilde{\tilde{b}} \end{pmatrix} \right).$$

For example, the method of the present invention may comprise at least the steps of:

- initiating the acquiring of at least a first calibration image;

- initiating the locating of a face landmark location of a face landmark in the first calibration image;

- initiating the locating of a further face landmark location of a further face landmark in the first calibration image;

- initiating the selecting of a first ROI in the first calibration image, wherein the selecting of the first ROI in the first calibration image is performed by using at least the face landmark location in the first calibration image and the further face landmark location in the first calibration image;

- initiating the constructing a first calibration gaze vector, wherein the constructing of the first calibration gaze vector is performed by means of at least the ANN, the ANN using as input at least the first ROI of the first calibration image; and

- initiating the constructing of the estimate of the location of the first calibration point of gaze onto the screen, wherein said constructing is performed by means of at least the first calibration gaze vector.

The estimate of the location of the first calibration point is in particular the intersection between the screen and a calibration line. The calibration line is in particular the line that intersects the eyeball center or the iris center of the eye contained in the first ROI of the first calibration image and that is parallel to the first calibration gaze vector. The constructing of the estimate of the location of the first calibration point onto the screen may be obtained by modelling the screen in terms of a plane and by constructing said estimate as the intersection between said plane and the calibration line.

The method of the present invention may further comprise the step of initiating the prompting of the user to look at the calibration point of the screen. In particular, said prompting may be performed before the acquiring of the first calibration image. Moreover, the method may also comprise the step of initiating the constructing of a first calibration head pose estimation vector, wherein the constructing of said vector may be performed by using at least the face landmark location and the further face landmark location in the first calibration image. In this case, the estimate of the locating of the first calibration point of gaze onto the screen may be based on the first calibration head pose estimation vector. The calibration function may also depend on the first calibration gaze vector and/or on the first calibration head pose estimation vector.

In particular, the calibration function depends on a location of each element of a set of $n_3$ calibration points of gaze and on an estimate of said location of each element of the set of $n_3$ calibration points of gaze. For instance, $n_3$ is comprised between 2 and 20 and, in particular between 3 and 15. Moreover, $n_3$ may be comprised between 4 and 10 and, more particularly, is equal to 5.

For example, the estimate of the location of each element of the set of $n_3$ calibration points of gaze may be obtained by using the steps leading to the construction of the estimate of the location of the first calibration point of gaze. In particular, the estimate of the location of each element of the set of $n_3$ calibration points of gaze is constructed by means of a corresponding calibration gaze vector and, optionally, of a corresponding calibration head pose estimation vector. For instance, the calibration function may depend on the plurality of calibration gaze vectors and/or on the plurality calibration head pose estimation vectors.

The calibration allows for constructing the first point of gaze by taking into account the actual conditions under which the user is looking at the screen, thereby improving the accuracy of the location of the first point of gaze under real setup conditions. The actual conditions may for instance comprise the position of the screen with respect to the screen, the fact that the user wears glasses or that the user is affected by strabismus.

For example, the calibration function may comprise or consists of a radial basis function. In particular, the radial basis function may be a linear function or a polyharmonic spline with exponent equal to 1. Radial basis functions allow for an improvement of the accuracy of the location of the first point of gaze, even when the calibration is based on a relatively low amount of calibration points. The first input data may comprise information to locate the second point of gaze onto the screen. In particular, said information may comprise or consist of the two-dimensional screen coordinate of the second point of gaze. Alternatively, or in conjunction with the above, the first input data may comprise information to characterize the first gaze vector and/or the head pose estimation vector. Information to characterize a three-dimensional vector, e.g. the first gaze vector and the head pose estimation vector, may comprise or consists of the three-dimensional coordinate of said vector.

According to an embodiment of the present invention, the calibration function depends on at least the distance, e.g. the Euclidean distance, between the location of the first calibration point of gaze and the estimate of the location of the first calibration point of gaze.

The dependency on the distance between the location of the first calibration point of gaze and the estimate of the location of the first calibration point of gaze allows for an improvement of the accuracy of the location of the first point of gaze, even when the calibration is based on a relatively low amount of calibration points, e.g. on fewer than ten, in particular fewer than six calibration points.

For example, if the location onto the screen of the generic $j^{th}$ element of the set of $n_3$ calibration points is described by the two-dimensional screen coordinate $(a_{c,j}, b_{c,j})$, and the estimate of the location of said generic element is described by the two-dimensional screen coordinate $(a_{e,j}, b_{e,j})$, the calibration function may read as follows:

$$\varphi\left(\begin{pmatrix} a \\ b \end{pmatrix}\right) = \sum_{i=1}^{n_3}\sum_{j=1}^{n_3}\left(\boldsymbol{D}_{n_3}^{-1}\right)_{ij}\ \chi\left(\begin{pmatrix} a_{c,j} \\ b_{c,j} \end{pmatrix}, \begin{pmatrix} a_{e,j} \\ a_{e,j} \end{pmatrix}\right)\ \chi\left(\begin{pmatrix} a_{e,j} \\ b_{e,j} \end{pmatrix}, \begin{pmatrix} a \\ b \end{pmatrix}\right), \quad (15)$$

wherein $\chi\left(\begin{pmatrix} a \\ b \end{pmatrix}, \begin{pmatrix} a' \\ b' \end{pmatrix}\right)$ is the distance between $\begin{pmatrix} a \\ b \end{pmatrix}$ and $\begin{pmatrix} a' \\ b' \end{pmatrix}$. In particular,

$$\chi\left(\begin{pmatrix} a \\ b \end{pmatrix}, \begin{pmatrix} a' \\ b' \end{pmatrix}\right) = \sqrt{(a-a')^2 + (b-b')^2}.$$

The $n_3$ dimensional matrix $\boldsymbol{D}_{n_3}^{-1}$ is the inverse of the matrix $\boldsymbol{D}_{n3}$. In particular, the generic entry of the latter matrix, $(\boldsymbol{D}_{n3})_{ij}$, is given by:

$$\left(\boldsymbol{D}_{n_3}\right)_{ij} = \chi\left(\begin{pmatrix} a_{e,i} \\ b_{e,i} \end{pmatrix}, \begin{pmatrix} a_{e,j} \\ a_{e,j} \end{pmatrix}\right).$$

The calibration function defined in equation (15) leads to a surprisingly accurate calibration.

According to the invention, the locating of the first point of gaze onto the screen is performed by means of a Kalman filter.

According to the invention, the Kalman filter is an algorithm that uses a series of estimations of the point of gaze on the screen to improve the accuracy of the locating of the first point of gaze. For example, the $k^{th}$ iteration of said filter allows for computing the two-dimensional screen coordinate, $(a_k, b_k)$, and the velocity, $(v_{a,k}, v_{b,k})$, of a $k^{th}$ estimated point of gaze in terms of the two-dimensional screen coordinate, $(a_{k-1}, b_{k-1})$, and the velocity, $(v_{a,k-1}, v_{b,k-1})$, of a $(k-1)^{th}$ estimated point of gaze and in terms of the two-dimensional screen coordinate, $(\vec{a}_k, \vec{b}_k)$, of a $k^{th}$ intermediate the point of gaze:

$$\begin{pmatrix} a_k \\ b_k \\ v_{a,k} \\ v_{b,k} \end{pmatrix} = (\mathbf{1}_4 - K_k H_k)\, F_k \begin{pmatrix} a_{k-1} \\ b_{k-1} \\ v_{a,k-1} \\ v_{b,k-1} \end{pmatrix} - K_k \begin{pmatrix} \bar{a}_k \\ \bar{b}_k \end{pmatrix}. \tag{16}$$

The matrix $K_k$ may be expressed as follows:

$$K_k = \left[ F_k\, P_{k-1|k-1}\, (F_k)^T + Q_k \right] (H_k)^T\, (S_k)^{-1}, \tag{17}$$

in terms of the matrix

$$S_k = R_k + H_k \left[ F_k\, P_{k-1|k-1}\, (F_k)^T + Q_k \right] (H_k)^T. \tag{18}$$

In particular, for each value of k, the matrix $P_{k|k}$ reads as follows:

$$P_{k|k} = \left[ (\mathbf{1}_4 - K_k H_k) \left[ F_k\, P_{k-1|k-1}\, (F_k)^T + Q_k \right] (\mathbf{1}_4 - K_k H_k)^T + K_k\, R_k\, (K_k)^T \right], \tag{19}$$

wherein $\mathbf{1}_4$ is the 4x4 identity matrix. The matrices $R_k$ and $Q_k$ are the covariance of the observation noise at the $k^{th}$ iteration and the covariance of the process noise at the $k^{th}$ iteration, respectively. The matrices $F_k$ and $H_k$ are the state transition model matrix at the $k^{th}$ iteration and the observation model matrix at the $k^{th}$ iteration, respectively. In particular, at least one of the following relations holds:

$$F_k = \begin{pmatrix} 1 & 0 & \delta_t & 0 \\ 0 & 1 & 0 & \delta_t \\ 0 & 0 & 1 & 0 \\ 0 & 0 & 0 & 1 \end{pmatrix}, \qquad H_k = \begin{pmatrix} 1 & 0 & 0 & 0 \\ 0 & 1 & 0 & 0 \end{pmatrix}. \tag{20}$$

In particular, $\delta_t$ may be written as $\delta_t = 1/v$, in terms of the frequency $v$ described above. The matrices $R_k$, $Q_k$, $F_k$ and/or $H_k$ may be independent of the iteration. At least one of the following relations may hold:

$$P_{0|0} = \mathbf{0}, \qquad \begin{pmatrix} a_0 \\ b_0 \\ v_{a,0} \\ v_{b,0} \end{pmatrix} = \begin{pmatrix} 0 \\ 0 \\ 0 \\ 0 \end{pmatrix} \overset{\text{def}}{=} V_0, \tag{21}$$

wherein $\mathbf{0}$ is the null matrix. For example, the first and the second point of gaze may be computed by using the Kalman filter with one iteration, e.g. by using the equations (16) to (21) with the replacement $k \to 1$. In this case, the first and the second point of gaze are the first estimated point of gaze and the first intermediate point of gaze, respectively. In this case, in particular, the $0^{th}$ estimated point of gaze may be the point of the screen with two-dimensional screen coordinates ($a_0$, $b_0$) and with velocity ($v_{a,0}$, $v_{b,0}$), as specified in equation (21).

The first point of gaze may be iteratively computed by using the Kalman filter with M iterations starting from $P_{0|0}$ and $V_0$. In this case, in particular, the first and the second point of gaze are the $M^{th}$ estimated point of gaze and the $M^{th}$ intermediate point of gaze, respectively. For example, $M$ is a given integer number. Alternatively, M may be the smallest number of iterations needed to meet a stopping condition. For example, the stopping condition may comprise the requirement that the distance between the $M^{th}$ estimated point of gaze and the $M^{th}$ intermediate point of gaze is lower than a first threshold and/or the requirement that the distance between the $M^{th}$ estimated point of gaze and the $(M - 1)^{th}$ estimated point of gaze is lower than a second threshold. In particular, the first threshold may be equal to the second threshold.

According to an embodiment of the method of the present invention, the locating of the first point of gaze onto the screen is performed by means of a third point of gaze and a covariance matrix of the process noise, wherein the covariance matrix of the process noise comprises a plurality of entries, said entries being a monotonically increasing function of the distance between the second point of gaze and the third point of gaze. In particular, each of the entries of said covariance matrix may be a monotonically increasing function of the distance between the second point of gaze and the third point of gaze.

For instance, the distance between the first point of gaze and the third point of gaze may be expressed in unit of pixels. In particular, the distance between the second and the third point of gaze is the Euclidean distance between said points of gaze. In particular, if the first point of gaze is the $M^{th}$ intermediate point of gaze, the third point of gaze may be the $(M - 1)^{th}$ estimated point of gaze and the distance, $d_{M,M-1}$, between the first and the third point of gaze reads as follows:

$$d_{M,M-1} = \sqrt{(\bar{a}_M - a_{M-1})^2 + \left(\bar{b}_M - b_{M-1}\right)^2}. \qquad (22)$$

The covariance matrix of the process noise may be the covariance matrix of the process noise at the $k^{th}$ iteration, $\boldsymbol{Q}_k$, and at least one of the following relations may hold:

$$\boldsymbol{Q}_k = \begin{pmatrix} q & 0 & 0 & 0 \\ 0 & q & 0 & 0 \\ 0 & 0 & q & 0 \\ 0 & 0 & 0 & q \end{pmatrix}, \qquad \boldsymbol{Q}_0 = \begin{pmatrix} q_3 & 0 & 0 & 0 \\ 0 & q_3 & 0 & 0 \\ 0 & 0 & q_3 & 0 \\ 0 & 0 & 0 & q_3 \end{pmatrix}. \qquad (23)$$

For example, q is a function of the distance, $d_{k,k-1}$, and may read as follows:

$$q = \begin{cases} q_0, & d_{k,k-1} \le d_0 \\ q_1, & d_0 < d_{k,k-1} \le d_1 \\ q_2, & d_1 < d_{k,k-1} \le d_2 \\ q_3, & d_{k,k-1} > d_2 \end{cases}, \qquad (24)$$

wherein $d_{k,k-1}$ may be obtained by using equation (23) with the replacement $M \to k$. In particular, $q_0$ may be comprised in the interval between $10^{-35}$ and $10^{-25}$ and, more particularly, in the interval between $10^{-32}$ and $10^{-28}$. Moreover, $q_1$ may be comprised in the interval between $10^{-25}$ and $10^{-15}$ and, in particular, in the interval between $10^{-22}$ and $10^{-18}$. For example, $q_2$ is comprised in the interval between $10^{-15}$ and $10^{-5}$ and, more particularly, in the interval between $10^{-12}$ and $10^{-8}$. For instance, $q_3$ is comprised in the interval between $10^{-5}$ and $10^{-1}$ and, in particular, in the interval between $10^{-3}$ and 0.5. Moreover, $q_0$, $q_1$, $q_2$, and/or $q_3$ may be equal to $10^{-30}$, $10^{-21}$, $10^{-10}$, and $10^{-2}$, respectively. Further, $d_0$ may be comprised in the interval between 50 and 220 pixels and, more particularly, in the interval between 100 and 200 pixels. In particular, $d_1$ is comprised in the interval between 200 and 400 pixels and, more particularly, in the interval between 220 and 300 pixels. Further, $d_2$ is comprised in the interval between 300 and 600 pixels and, more particularly, in the interval between 400 and 550 pixels. Moreover, $d_0$, $d_1$ and/or $d_2$, may be equal to 128 pixels, 256 pixels and 512 pixels, respectively.

In this embodiment, the numerical importance of the covariance matrix of the process noise is reduced when the distance between the intermediate point of gaze of the $k^{th}$ iteration and the estimated point of gaze of the $(k - 1)^{th}$ iteration decreases. This way, the Lukas-Kanade filter allows for attaining a relatively high accuracy of the locating of the first point of gaze by using a relatively small number of iterations.

In a further embodiment of the method of the present invention, the locating of the first point of gaze onto the screen is performed by means of the third point of gaze and a covariance matrix of the observation noise. The covariance matrix of the observation noise comprises a plurality of entries, said entries being a monotonically increasing function of the distance between the second point of gaze and the third point of gaze. For example, each of the entries of said covariance matrix may be a monotonically increasing function of the distance between the second point of gaze and the third point of gaze.

The covariance matrix of the observation noise may be the covariance of the observation noise at the $k^{th}$ iteration, $\boldsymbol{R}_k$, and at least one of the following relations may hold:

$$\boldsymbol{R}_k = \begin{pmatrix} r & 0 \\ 0 & r \end{pmatrix}, \qquad \boldsymbol{R}_0 = \begin{pmatrix} r_1 & 0 \\ 0 & r_1 \end{pmatrix}. \qquad (25)$$

For example, r is a function of the distance $d_{k,k-1}$ and may read as follows:

$$ r = \begin{cases} r_0, & d_{k,k-1} \leq d_3 \\ r_1, & d_{k,k-1} > d_3 \end{cases}. \qquad (26) $$

In particular, $r_0$ may be comprised in the interval between $10^{-35}$ and $10^{-25}$ and, more particularly, in the interval between $10^{-32}$ and $10^{-28}$. Moreover, $r_1$ may be comprised in the interval between $10^{-5}$ and $10^{-1}$ and, in particular, in the interval between $10^{-3}$ and 0.5. Moreover, $r_0$ and/or $r_1$ may be equal to $10^{-30}$ and $10^{-2}$, respectively. Further, $d_3$ may be comprised in the interval between 50 and 220 pixels and, more particularly, in the interval between 100 and 200 pixels. In particular, $d_3$, is equal to 128 pixels.

An embodiment of the method comprises the steps of:

- initiating the locating of a sixth face landmark location of a sixth face landmark in the first image;

- initiating the locating of a seventh face landmark location of a seventh face landmark in the first image;

- initiating the selecting of a second region of interest in the first image, wherein the selecting of the second region of interest is performed by using at least the sixth face landmark location and the seventh face landmark location; and

- initiating the constructing of a second gaze vector by means of at least the artificial neural network, the artificial neural network using as input at least the second region of interest.

In particular, according to this embodiment, the locating the first point of gaze onto the screen is performed by means of the first and of the second gaze vector. For instance, the second ROI comprises at least a second eye or a portion thereof. In particular, the second eye is different from the first eye. The second ROI may be encoded by a second bitmap. In this embodiment, the location of the first point of gaze is obtained by using information about the gaze vectors of both eyes. The accuracy of said location is thereby improved.

When constructing the second gaze vector, the ANN uses as input the second ROI. In this case, in particular, the ANN input comprises information about the position and the color of the pixels of the second ROI and, more particularly, the ANN input may comprise or consist of the second bitmap.

The method according to the present invention may comprise the step of initiating the locating of a fourth and a fifth point of gaze, wherein the locating of the fourth and the fifth point of gaze is performed by means of the first and the second gaze vector, respectively. In particular, the screen coordinates of the first or the second point of gaze, $(\hat{a}, \tilde{b})$, may be obtained by a weighted sum of the screen coordinates of the fourth point of gaze, $(\hat{a}_4, \hat{b}_4)$, and of the screen coordinates of the fifth point of gaze, $(\hat{a}_5, \hat{b}_5)$, as follows:

$$ \begin{pmatrix} \hat{a} \\ \hat{b} \end{pmatrix} = u_1 \begin{pmatrix} \hat{a}_4 \\ \hat{b}_4 \end{pmatrix} + u_2 \begin{pmatrix} \hat{a}_5 \\ \hat{b}_5 \end{pmatrix}, \quad \text{with} \quad u_1 + u_2 = 1. \qquad (27) $$

For instance, the first or the second point of gaze may substantially coincide with the midpoint between the location of the fourth and of the fifth points of gaze, that is $(\hat{a}, \hat{b})$ may be obtained from the equation above by setting $u_1 = u_2 = 1/2$. The weights $u_1$ and $u_2$ may depend on the head pose estimation vector. In particular, the dependence of these weights is such that:

- $u_1$ is lower than $u_2$ if, due to the head pose of the user, the construction of the fourth point of gaze is less accurate than the construction of the fifth point of gaze; and
- $u_1$ is greater than $u_2$ if, due to the head pose of the user, the reconstruction of the fourth point of gaze is more accurate than the construction of the fifth point of gaze.

For example, the construction of the fourth point of gaze is more or less accurate than the one of the fifth point of gaze if, respectively, the reconstruction of the first eye is more or less accurate than the reconstruction of the second eye. For instance, the reconstruction of an eye of the user's face may be more accurate than the reconstruction of the other eye if in the first image the user's head is rotated in such a way that the latter eye is at least partially obstructed, e.g. by the user's nose.

The method of the present invention may further comprise the step of receiving the location of the first point of gaze onto the screen and/or the step of initiating the displaying of the location of the first point of gaze onto the screen.

According to the present invention, the step of initiating an action, such as the acquiring of an image, the locating of a landmark or a point of gaze, the selecting of a region of interest, the constructing of a vector, and/or the estimating of a face landmark, may, in particular, be performed by performing said action. For example, the step of initiating the acquiring of the image, e.g. of the first or the second image, may be performed by acquiring said image. Similarly, the step of initiating the locating a face landmark location in an image may be performed by locating said face landmark location in said image. For instance, the step of initiating the constructing of a vector, such as the first gaze vector or the head pose estimation vector, may be performed by constructing said vector.

The step of initiating an action, such as the acquiring of an image, the locating of a landmark or a point of gaze, the selecting of a ROI, the constructing of a vector, and/or the estimating of a face landmark, may, in particular, be performed by instructing a dedicated device to perform said action. For example, the step of initiating the acquiring of the image, e.g. of the first or the second image, may be performed by instructing the recording device to acquire said image. Similarly, the step of initiating the locating of a face landmark location in an image may be performed by instructing a dedicated computing device to locate said face landmark location in said image.

According to the present invention, the step of initiating a first action may be performed together with the step of initiating one or more other actions. For instance, the step of initiating the locating of the first landmark and the step of initiating the locating of the second landmark may be performed together by initiating the locating of a plurality of face landmarks, said plurality including the first and the second landmark.

Moreover, the step of initiating the selecting of the first ROI may be performed together with the steps of initiating the locating the first and the second face landmarks. For instance, the computing device carrying out the present invention may instruct another computing device to locate the first and the second face landmarks. The latter device may be configured in such a way that, once the latter device has performed this locating, it performs the selection of the first ROI. In this case, according to the present invention, the steps of initiating the locating of the first and the second face landmarks initiates also the selecting of the first ROI.

In one embodiment, all the steps of the method according to the present invention may be performed together. For example, the computing device carrying out the present invention may instruct another computing device to acquire the first image. Once the latter device has acquired said image, it locates the first and the second landmarks, selects the first ROI, constructs the first gaze vector, and then locates the first point of gaze onto the screen. In this case, according to the present invention, the step of initiating the acquiring of the first image initiates also the locating of the first and second face landmark locations, the selecting of the first ROI, the constructing of the first gaze vector, and the locating of the first point of gaze onto the screen.

Through the present specification, the steps of the method of the present invention are disclosed according to a given order. This given order, however, does not necessarily reflect the chronological order, according to which the steps of the present invention are performed.

The present invention refers also to a data processing system comprising at least a processor configured to perform the method according to the present invention.

Moreover, the present invention refers to a computer program product comprising instructions which, when the computer program product is executed by a computing device, cause the computing device to carry out the method according to the present invention.

The present invention concerns also a computer readable storage medium comprising instructions which, when executed by a computer device, cause the computer device to carry out the method according to the present invention. The computer readable medium is, in particular, non-transitory.

Exemplary embodiments of the invention are described in the following with respect to the attached figures. The figures and corresponding detailed description serve merely to provide a better understanding of the invention and do not constitute a limitation whatsoever of the scope of the invention as defined in the claims. In particular:

**Fig. 1**     is a schematic view of a first embodiment of the data processing system according to the present invention;

**Fig. 2**     is a flow diagram of the operation of a first embodiment of the method according to the present invention;

**Fig. 3a**    is a schematic representation of the first image acquired by performing the first embodiment of the method according to the present invention;

**Fig. 3b**    is a schematic representation of the face landmarks located by performing the first embodiment of the method according to the present invention;

**Fig.3c**     is a schematic representation of the first ROI selected by performing the first embodiment of the method according to the present invention;

**Fig. 4a, 4b**     are schematic representations of the heatmaps obtained by performing the first embodiment of the method according to the present invention; and

**Fig. 5**     is a flow diagram of the operation of a second embodiment of the method according to the present invention.

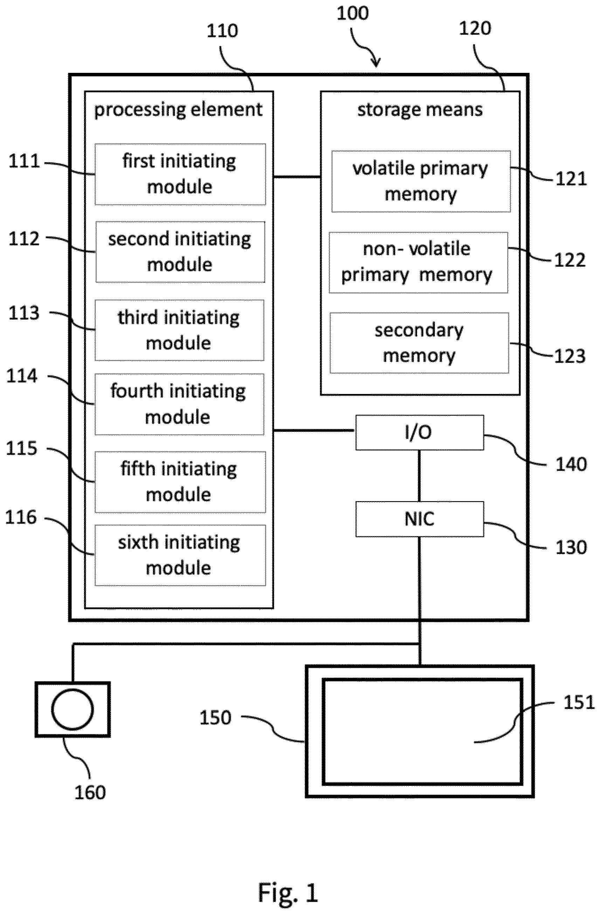

**Fig. 1** is a schematic view of a first embodiment of the data processing system 100 according to the present invention. Said data processing system 100 may be a computing device or a cluster thereof. The data processing system 100 comprises a processing element 110 and storage means 120, which are in data communication with one another.

The processing element 110 may consist of or comprise a CPU and/or a GPU. Moreover, the processing element 110 comprises several modules 111-116 configured to perform the steps of the method according to the present invention. The first initiating module 111 is configured to initiate the acquiring at least the first image. For instance, the first initiating module 111 may be an acquiring module configured to acquire, e.g. capture, the first image.

The second initiating module 112 is configured to initiate the locating of the first face landmark location of the first face landmark in the first image. The second initiating module 112 may be a first locating module configured to locate in the first image the first face landmark location of the first face landmark. The third initiating module 113 is configured to initiate the locating of the second face landmark location of the second face landmark in the first image. In particular, the second initiating module 112 may be a second locating module configured to locate the second landmark location of the second face landmark.

The third 113 and the second initiating module 112 may be the same initiating module which, e.g., may be configured to initiate the locating in the first image of a plurality of face landmark locations, said plurality including the first face landmark location of the first face landmark and the second face landmark location of the second face landmark.

The fourth initiating module 114 is configured to initiate the selecting of the first ROI and, in particular, is a selecting module configured to select the first ROI by using at least the first face landmark location and the second face landmark location. The fifth initiating module 115 is configured to initiate the construction of the first gaze vector. For example, the fifth initiating module 115 is a constructing module configured to construct said gaze vector by means of the ANN.

The sixth initiating module 116, instead, is configured to initiate the locating of the first point of gaze onto the screen. For instance, the sixth initiating module 116 is a third locating module configured to locate the first point of gaze onto the screen by means of at least the first gaze vector.

The storage means 120 may comprise volatile primary memory 121 and/or non-volatile primary memory 122. The storage means 120 may further comprise a secondary memory 123, which may store the operating system and/or the ANN. Moreover, the secondary memory 123 may store a computer program product comprising instructions which, when the computer program product is executed by the processing element 110, cause the data processing system 100 to carry out the method according to the present invention. the secondary memory 123 may store the first image and/or information about the first ROI.

The secondary memory 123, the primary memories 121, 122, and the processing element 110 need not be physically housed within the same housing and may instead be spatially separated from one another. In particular, the secondary memory 123, the primary memories 121, 122, and the processing element 110 may be spatially separated from one another and may exchange data with one another via wired and/or wireless media (not shown).

The data processing system 100 may further comprise an input/output (I/O) interface 140 which allows said system 100 to communicate with input/output devices (e.g. displays, keyboards, touchscreens, printers, mice, or the like).

The data processing system 100 may further comprise a network interface controller (NIC) 130 configured to connect the system 100 with a suitable network (not shown). According to the present invention, a suitable network may for instance be an intranet, the internet or a cellular network. For instance, the NIC 130 may allow the data processing system 100 to exchange data with another computing device (not shown) which e.g. performs the locating of the face landmarks, the selecting of the first ROI, the constructing of the first gaze vector, and/or the locating of the first point of gaze.

In particular, the data processing system 100 comprises a recording device 160 which is configured to capture at least the first image. For instance, the recording device may be a photo camera and/or a video camera. As shown in **fig. 1,** the recording device 160 may be connected to the processing element 110 via the I/O interface 140. For example, the recording device 160 may be connected wirelessly to the I/O interface via the NIC 130. The data processing system 100 may comprise a display unit 150 which comprise the screen 151 and is connected to the processing element 110 via the I/O interface 140. In particular, said unit 140 may be connected wirelessly to the I/O interface via the NIC 130. The recording device 160 and/or the display unit 150 may be intelligent devices with their own memory for storing associated instructions and data for use with the I/O interface 140 or the peripheral devices.

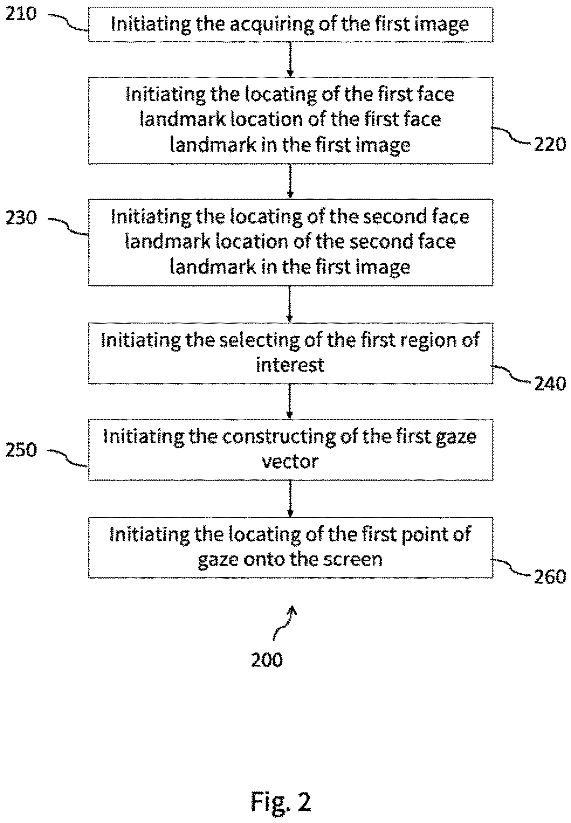

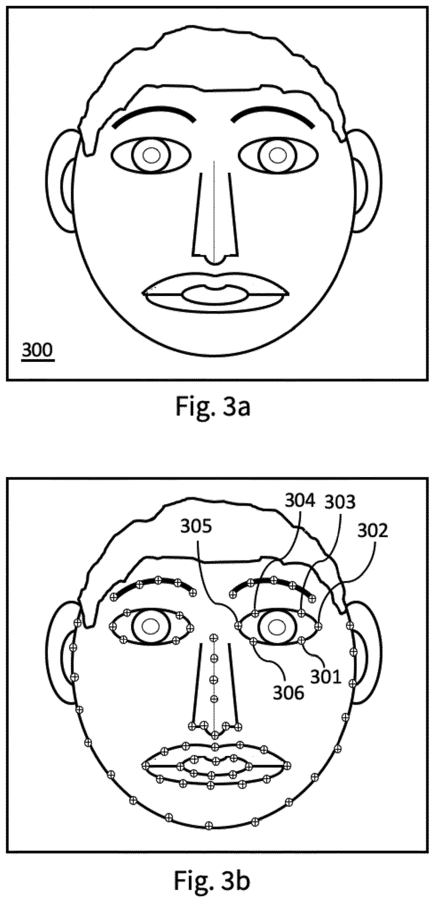

**Fig. 2** is a flow diagram 200 of the operation of a first embodiment of the method according to the present invention. In particular, the first embodiment of the method according to the present invention may be performed by a first computing device (not shown), which, for example, may be the data processing system 100 described above and schematically depicted in **fig.** 1. At step 210, the first computing device initiates the acquiring of the first image 300, schematically represented in **fig. 3a.** In particular, the first image 300 is acquired by using the recording device 160.

At steps 220 and 230, the first computing device initiates the locating of the first face landmark location 301 of the first face landmark in the first image 300 and the locating of the second face landmark location 302 of the second face landmark in the first image 300. In particular, said steps may be performed together by initiating the locating in the first image of sixty-eight face landmarks, whose locations are represented in **fig. 3b** by crossed dots. For instance, the locating of said face landmarks is performed by means of the first location algorithm. In particular, the first and the second face landmark are the third eye landmark 301 and the fourth eye landmark 302, respectively. Moreover, the set of sixty-eight face landmarks comprises the fifth 303, the sixth 304, the seventh 305, and the eighth 306 eye landmarks.

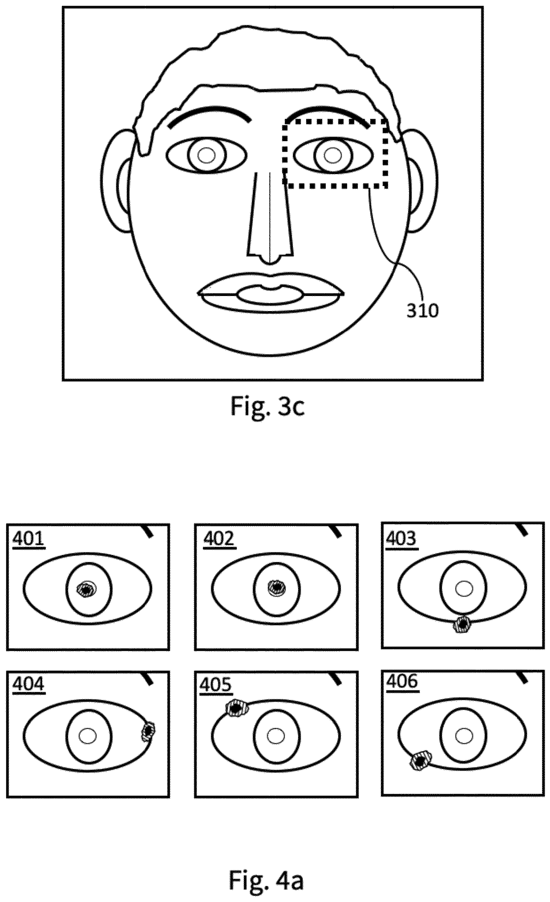

At step 240, the first computing device initiates the selecting of the first ROI 310 schematically represented in **fig. 3c.** The selecting of the first ROI 310 is performed by using the aforementioned six eye landmarks 301 to 306. In particular, the first ROI 310 consists of the pixels with column number comprised between the integer numbers $C_3$ and $C_4$, and with row number comprised between the integer numbers $R_3$ and $R_4$, wherein $C_3$, $C_4$, $R_3$ and $R_4$ fulfil equations (4).

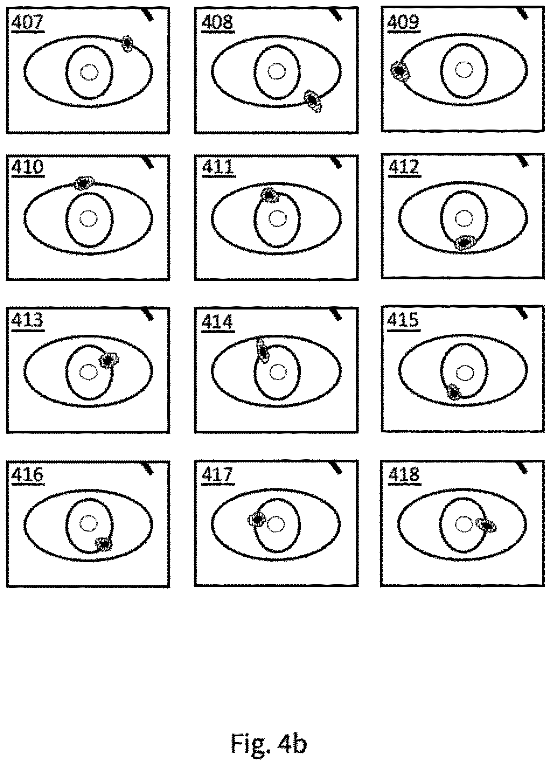

At step 250, the first computing device initiates the constructing of the first gaze vector. The constructing of this gaze vector is performed by the ANN. In particular, the ANN output comprises the eighteen heatmaps 401 to 418, ranging from first to eighteenth. These heatmaps are schematically depicted in **figs. 4a** and **4b.** More specifically, the heatmap 401 and 402 encodes the per-pixel confidence of the iris center and the eyeball center, respectively. Each of the heatmaps 403 to 410 encodes the per-pixel confidence of the location of one of the first to eighth eye border landmark, in such a way that different eye border landmarks are associated to different heatmaps. Moreover, each of the heatmaps 411 to 418 encodes the per-pixel confidence location of one of the first to eighth iris border landmark, in such a way that different iris border landmarks are associated to different heatmaps.

In the heatmaps 401-418 schematically depicted in **figs. 4a** and **4b,** the regions in which the per-pixel confidence assumes its largest value are shaded or highlighted in black. Moreover, the value of the per-pixel confidence is greater in the dark-colored region than in the shaded one. The location of the eye landmark associated to each of the heatmaps 401-418 may coincide with the location of a point in the dark-colored region of said each of the heatmaps 401-418. In particular, the location of the iris center, of the eyeball center, of the eight eye border landmarks, and of the eight iris border landmarks is obtained by processing the aforementioned eighteen heatmaps 401-418 by means of a soft-argmax layer.

The constructing of the gaze vector is performed by means of the SVR algorithm. In particular, the SVR algorithm uses as input the eyeball center location, the iris center location, the eight iris border landmark locations and the eight eye border landmark locations obtained by using the eighteen heatmaps 401-418.

At step 260, the first computing device initiates the locating of the first point of gaze onto the screen. The first point of gaze is in particular the intersection between the screen 151 and the first gaze line. For example, the locating of the first point of gaze onto the screen 151 may be obtained by modelling the screen in terms of a plane and by constructing the first point of gaze as the intersection between said plane and the first gaze line.

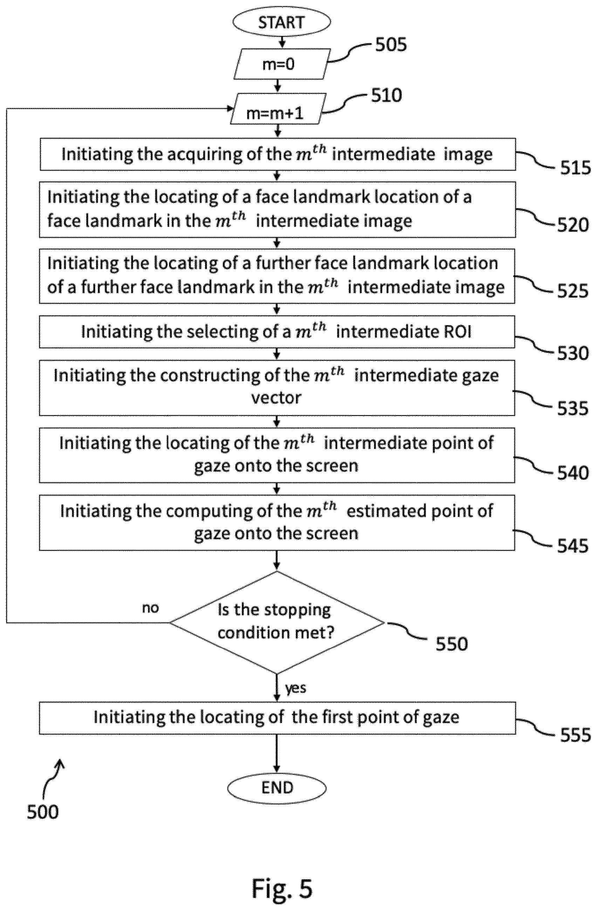

**Fig. 5** is a flow diagram 500 of the operation of a second embodiment of the method according to the present invention. In particular, said embodiment may be performed by a second computing device (not shown), which, for example, may be the data processing system 100 described above and schematically depicted in **fig. 1.** According to this embodiment, the first point of gaze is iteratively computed by using the Kalman filter starting from $P_{0|0}$ and $V_0$ as defined in equation (21).

The generic iteration of the Kalman filter is described in terms of a counter, m, which, at step 505 is initialized to the value zero. During the $m^{th}$ iteration, the second computing device initiates the acquiring of an $m^{th}$ intermediate image (step 515), which, in particular, may be acquired by using the recording device 160. In particular, the first image and the $m^{th}$ intermediate image comprise the same subject and are captured at different time instants. For example, the first image and the $m^{th}$ intermediate image are two frames of a video which e.g. is captured by the recording device 160 of the computing device of the present invention.

At steps 520 and 525 of the $m^{th}$ iteration, the second computing device initiates the locating in the $m^{th}$ intermediate image of a face landmark location of a face landmark and of a further face landmark location a further face landmark. Said steps may be performed together by initiating the locating of sixty-eight face landmarks by means of the first location algorithm.

In particular, the distribution of the sixty-eight face landmarks in the $m^{th}$ intermediate image is similar to the distribution of the sixty-eight face landmarks, that are schematically depicted in **fig. 3a.** In particular, the set of sixty-eight face landmarks located in the $m^{th}$ intermediate image comprises six eyes landmarks for the left eye and six eye landmarks for the right eye.

At step 530 of the $m^{th}$ iteration, the second computing device initiates the selecting of a $m^{th}$ intermediate ROI. In particular, the $m^{th}$ intermediate ROI comprises an eye, say the left one, and is selected by using the six eye landmarks of the left eye. In particular, the $m^{th}$ intermediate ROI consists of the pixels with column number comprised between the integer numbers $C_3$ and $C_4$, and with row number comprised between the integer numbers $R_3$ and $R_4$. The integers numbers $C_3$, $C_4$, $R_3$ and $R_4$ may be computed by using equations (4) and the coordinates in the $m^{th}$ intermediate image of the six eye landmarks of the left eye. The position of the $m^{th}$ intermediate ROI in the $m^{th}$ intermediate image is similar to the position of the first ROI schematically depicted in **fig. 3b.**

At step 535, the second computing device initiates the constructing of an $m^{th}$ intermediate gaze vector by using the ANN. The ANN of the second embodiment is identical to the one used by the first embodiment of the method according to the present invention. In particular, the ANN uses as inputs the pixel of the $m^{th}$ intermediate ROI and provides eighteen heatmaps as output. Said heatmaps are similar to the ones schematically depicted in **figs. 4a** and **4b** and are used to find the location in the $m^{th}$ intermediate image of the iris center of the left eye, of the eyeball center of the left eye, of eight eye border landmarks of the left eye, and of eight iris border landmarks of the left eye. For example, said landmarks may be obtained by processing the eighteen heatmaps by means of a soft-argmax layer.

The location of the iris center of the left eye, of the eyeball center of the left eye, of eight eye border landmarks of the left eye, and of eight iris border landmarks of the left eye are then used as input of the SVR algorithm constructing the $m^{th}$ intermediate gaze vector.

At step 540 of the $m^{th}$ iteration, the second computing device initiates the locating of the $m^{th}$ intermediate point of gaze onto the screen. Said point of gaze is in particular the intersection between the screen and the $m^{th}$ intermediate gaze line. For example, the locating of the first point of gaze onto the screen may be obtained by modelling the screen in terms of a plane and by constructing the first point of gaze as the intersection between said plane and the $m^{th}$ intermediate gaze line. In particular, the $m^{th}$ intermediate gaze line is the line that intersects the eyeball center of the eye contained in the $m^{th}$ intermediate ROI and that is parallel to the $m^{th}$ intermediate gaze vector.

At step 545 of the $m^{th}$ iteration, the second computing device initiates the computing of the $m^{th}$ estimated point of gaze onto the screen. The computation of this point of gaze is in particular performed by using the $m^{th}$ intermediate point of gaze, the $(m-1)^{th}$ estimated point of gaze computed during the the $(m-1)^{th}$ iteration and equations (16) to (26) with the replacement $k \rightarrow m$.

At step 550 of the $m^{th}$ iteration, the second computing device checks whether the $m^{th}$ estimated point of gaze meets the stopping condition. In particular, the stopping condition comprises the requirement that the Euclidean distance between the $m^{th}$ estimated point of gaze and the $m^{th}$ intermediate point of gaze is lower than the first threshold and/or the requirement that the distance between the $m^{th}$ estimated point of gaze and the $(m-1)^{th}$ estimated point of gaze is lower than the second threshold.

If the stopping condition is not met, the second computing device increments the value of the counter by one, see step 510, and performs the the $(m+1)^{th}$ iteration. If the stopping condition is met, at step 555, the second computing device initiates the locating of the first point of gaze, said locating being performed by setting said point of gaze to be equal to the $m^{th}$ estimated point of gaze constructed at the $m^{th}$ iteration.

## Claims

1. Computer-implemented method for locating a first point of gaze onto a screen (151), said method comprising at least the steps of:

   • initiating the acquiring (210) of at least a first image (300);
   • initiating the locating (220) of a first face landmark location (301) of a first face landmark in the first image (300);
   • initiating the locating (230) of a second face landmark location (302) of a second face landmark in the first image (300);
   • initiating the selecting (240) of a first region of interest (310) in the first image (300), wherein the selecting of the first region of interest (310) is performed by using at least the first face landmark location (301) and the second face landmark location (302);
   • initiating the constructing (250) of a first gaze vector, wherein the constructing of the first gaze vector is performed by means of at least an artificial neural network, the artificial neural network using as input at least the first region of interest (310);

   **characterized in that:**
   the method further comprises the step of:

   • initiating the locating (250) of the first point of gaze onto the screen (151), wherein the locating of the first point of gaze is performed by means of at least the first gaze vector and a Kalman filter, the Kalman filter using a series of estimations of the point of gaze on the screen.

2. Method according to claim 1, wherein the artificial neural network detects in the first region of interest (310) at least a first eye landmark location (403) of a first eye landmark and a second eye landmark location (404) of a second eye landmark.

3. Method according to anyone of the preceding claims, wherein the constructing of the gaze vector is performed by means of a support vector regression algorithm, the support vector regression algorithm using as input at least the first eye landmark location (403) and the second eye landmark location (404).

4. Method according to any one of the preceding claims, wherein the artificial neural network is an hourglass neural network.

5. Method according to any one of the preceding claims, further comprising the step of:

    • initiating the constructing of a head pose estimation vector, wherein the constructing of the head pose estimation vector is performed by using at least the first face landmark location (301) and the second face landmark location (302);

wherein the locating of the first point of gaze onto the screen (151) is based on the head pose estimation vector.

6. Method according to claim 5, wherein the constructing of the head pose estimation vector is performed at least by means of a three-dimensional face model, and wherein the three-dimensional face model uses as input at least the first face landmark location (301) and the second face landmark location (302).

7. Method according to any one of the preceding claims, further comprising the steps of:

    • initiating the acquiring of at least a second image;
    • initiating the locating of a third face landmark location of the first face landmark in the second image;
    • initiating the estimating of a fourth face landmark location of the first face landmark in the first image (300), wherein the estimating of the fourth face landmark location is performed by means of an optical flow equation and the third face landmark location; and
    • initiating the detecting of a fifth face landmark location of the first face landmark in the first image (300);

and wherein the locating of the first face landmark location (301) in the first image (300) is based on the fourth face landmark location and on the fifth face landmark location.

8. Method according to claim 7, wherein the locating of the first face landmark location (301) in the first image (300) is based on a landmark distance, the landmark distance being the distance between the third face landmark location and the fourth face landmark location.

9. Method according claim 7 or 8, wherein the first face landmark location (301) is equal to the weighted average between the fourth face landmark location and the fifth face landmark location.

10. Method according to any one of the preceding claims, further comprising the step of:

    • initiating the locating of a second point of gaze onto the screen (151), wherein the locating of the second point of gaze is performed by means of at least the first gaze vector;

wherein the locating of the first point of gaze onto the screen (151) is performed by means of the second point of gaze.

11. Method according to claim 10, wherein the locating of the second point of gaze onto the screen (151) is performed by means of a calibration function, the calibration function depending on at least a location of a calibration point of gaze and on an estimate of the location of the calibration point of gaze.

12. Method according to claim10, wherein the locating of the first point of gaze onto the screen (151) is performed by means of a third point of gaze and a covariance matrix of the process noise, wherein the covariance matrix of the process noise comprises a plurality of entries, said entries being a monotonically increasing function of the distance between the second point of gaze and the third point of gaze.

13. A data processing system (100) comprising at least a processor (110) configured to perform the method according to any one of the previous claims.

**14.** A computer program product comprising instructions which, when the computer program product is executed by a computing device, cause the computing device to carry out the method according to anyone of claims 1 to 12.

**15.** A computer readable storage medium comprising instructions which, when executed by a computer device, cause the computer device to carry out the method according to any one of claims 1 to 12.

**Patentansprüche**

**1.** Computerimplementiertes Verfahren zum Lokalisieren eines ersten Blickpunktes auf einem Bildschirm (151), wobei das Verfahren mindestens die Schritte umfasst:

• Initiieren des Erfassens (210) mindestens eines ersten Bildes (300);
• Initiieren des Lokalisierens (220) eines ersten Gesichtsmerkmalsorts (301) eines ersten Gesichtsmerkmals auf dem ersten Bild (300);
• Initiieren des Lokalisierens (230) eines zweiten Gesichtsmerkmalsorts (302) eines zweiten Gesichtsmerkmals auf dem ersten Bild (300);
• Initiieren des Auswählens (240) einer ersten Region von Interesse (310) auf dem ersten Bild (300), wobei das Auswählen der ersten Region von Interesse (310) mithilfe mindestens des ersten Gesichtsmerkmalsorts (301) und des zweiten Gesichtsmerkmalsorts (302) durchgeführt wird;
• Initiieren des Erstellens (250) eines ersten Blickvektors, wobei das Erstellen des ersten Blickvektors mittels mindestens eines künstlichen neuronalen Netzes durchgeführt wird, wobei das künstliche neuronale Netz als Eingabe mindestens die erste Region von Interesse (310) verwendet;

**dadurch gekennzeichnet, dass:**
das Verfahren ferner den Schritt umfasst:

• Initiieren des Lokalisierens (250) des ersten Blickpunktes auf dem Bildschirm (151), wobei das Lokalisieren des ersten Blickpunktes mittels mindestens des ersten Blickvektors und eines Kalman-Filters durchgeführt wird, wobei das Kalman-Filter eine Reihe von Schätzungen des Blickpunktes auf dem Bildschirm verwendet.

**2.** Verfahren gemäß Anspruch 1, wobei das künstliche neuronale Netz in der ersten Region von Interesse (310) mindestens einen ersten Augenmerkmalsort (403) eines ersten Augenmerkmals und einen zweiten Augenmerkmalsort (404) eines zweiten Augenmerkmals detektiert.

**3.** Verfahren gemäß einem der vorhergehenden Ansprüche, wobei das Erstellen des Blickvektors mittels eines Stützvektorregressionsalgorithmus durchgeführt wird, wobei der Stützvektorregressionsalgorithmus als Eingabe mindestens den ersten Augenmerkmalsort (403) und den zweiten Augenmerkmalsort (404) verwendet.

**4.** Verfahren gemäß einem der vorhergehenden Ansprüche, wobei das künstliche neuronale Netz ein sanduhrartiges neuronales Netz ist.

**5.** Verfahren gemäß einem der vorhergehenden Ansprüche, das ferner den Schritt umfasst:

• Initiieren des Erstellens eines Kopfhaltungs-Schätzungsvektors, wobei das Erstellen des Kopfhaltungs-Schätzungsvektors mithilfe mindestens des ersten Gesichtsmerkmalsorts (301) und des zweiten Gesichtsmerkmalsorts (302) durchgeführt wird;

wobei das Lokalisieren des ersten Blickpunktes auf dem Bildschirm (151) auf dem Kopfhaltungs-Schätzungsvektor basiert.

**6.** Verfahren gemäß Anspruch 5, wobei das Erstellen des Kopfhaltungs-Schätzungsvektors mindestens mittels eines dreidimensionalen Gesichtsmodells durchgeführt wird und wobei das dreidimensionale Gesichtsmodell als Eingabe mindestens den ersten Gesichtsmerkmalsort (301) und den zweiten Gesichtsmerkmalsort (302) verwendet.

**7.** Verfahren gemäß einem der vorhergehenden Ansprüche, das ferner die Schritte umfasst:

• Initiieren des Erfassens mindestens eines zweiten Bildes;

• Initiieren des Lokalisierens eines dritten Gesichtsmerkmalsorts des ersten Gesichtsmerkmals auf dem zweiten Bild;
• Initiieren des Schätzens eines vierten Gesichtsmerkmalsorts des ersten Gesichtsmerkmals auf dem ersten Bild (300), wobei das Schätzen des vierten Gesichtsmerkmalsorts mittels einer Optischer-Fluss-Gleichung und des dritten Gesichtsmerkmalsorts durchgeführt wird; und
• Initiieren des Detektierens eines fünften Gesichtsmerkmalsorts des ersten Gesichtsmerkmals auf dem ersten Bild (300);

und wobei das Lokalisieren des ersten Gesichtsmerkmalsorts (301) auf dem ersten Bild (300) auf dem vierten Gesichtsmerkmalsort und auf dem fünften Gesichtsmerkmalsort basiert.

8. Verfahren gemäß Anspruch 7, wobei das Lokalisieren des ersten Gesichtsmerkmalsorts (301) auf dem ersten Bild (300) auf einer Merkmalsdistanz basiert, wobei die Merkmalsdistanz die Distanz zwischen dem dritten Gesichtsmerkmalsort und dem vierten Gesichtsmerkmalsort ist.

9. Verfahren gemäß Anspruch 7 oder 8, wobei der erste Gesichtsmerkmalsort (301) gleich dem gewichteten Mittel zwischen dem vierten Gesichtsmerkmalsort und dem fünften Gesichtsmerkmalsort ist.

10. Verfahren gemäß einem der vorhergehenden Ansprüche, das ferner den Schritt umfasst:

• Initiieren des Lokalisierens eines zweiten Blickpunktes auf dem Bildschirm (151), wobei das Lokalisieren des zweiten Blickpunktes mittels mindestens des ersten Blickvektors durchgeführt wird;

wobei das Lokalisieren des ersten Blickpunktes auf dem Bildschirm (151) mittels des zweiten Blickpunktes durchgeführt wird.

11. Verfahren gemäß Anspruch 10, wobei das Lokalisieren des zweiten Blickpunktes auf dem Bildschirm (151) mittels einer Kalibrierungsfunktion durchgeführt wird, wobei die Kalibrierungsfunktion mindestens von einem Ort eines Kalibrierungsblickpunktes und von einer Schätzung des Ortes des Kalibrierungsblickpunktes abhängt.

12. Verfahren gemäß Anspruch 10, wobei das Lokalisieren des ersten Blickpunktes auf dem Bildschirm (151) mittels eines dritten Blickpunktes und einer Kovarianzmatrix des Prozessrauschens durchgeführt wird, wobei die Kovarianzmatrix des Prozessrauschens mehrere Einträge umfasst, wobei die Einträge eine monoton steigende Funktion der Distanz zwischen dem zweiten Blickpunkt und dem dritten Blickpunkt sind.

13. Datenverarbeitungssystem (100), das mindestens einen Prozessor (110) umfasst, der dazu ausgebildet ist, das Verfahren gemäß einem der vorstehenden Ansprüche durchzuführen.

14. Computerprogrammprodukt, das Anweisungen umfasst, die, wenn das Computerprogrammprodukt durch eine Computervorrichtung ausgeführt wird, bewirken, dass die Computervorrichtung das Verfahren gemäß einem der Ansprüche 1 bis 12 ausführt.

15. Computerlesbares Speichermedium, das Anweisungen umfasst, die bei Ausführung durch eine Computervorrichtung bewirken, dass die Computervorrichtung das Verfahren gemäß einem der Ansprüche 1 bis 12 ausführt.

**Revendications**

1. Méthode mise en œuvre par ordinateur afin de localiser un premier point de regard sur un écran (151), ladite méthode comprenant au moins les étapes suivantes :

• lancement de l'acquisition (210) d'au moins une première image (300) ;
• lancement de la localisation (220) d'un premier emplacement de repère de visage (301) d'un premier repère de visage dans la première image (300) ;
• lancement de la localisation (230) d'un second emplacement de repère de visage (302) d'un second repère de visage dans la première image (300) ;
• lancement de la sélection (240) d'une première région d'intérêt (310) dans la première image (300), dans lequel la sélection de la première région d'intérêt (310) est effectuée en utilisant au moins le premier emplacement de repère de visage (301) et le second emplacement de repère de visage (302) ;
- lancement de la construction (250) d'un premier vecteur de regard, dans lequel la construction du premier vecteur de regard est effectuée au moyen d'au moins un réseau neuronal artificiel, le réseau neuronal artificiel utilisant comme entrée au moins la première région d'intérêt (310) ;

**caractérisée en ce que** :
la méthode comprend par ailleurs l'étape suivante :

- lancement de la localisation (250) du premier point de regard sur l'écran (151), dans lequel la localisation du premier point de regard est effectuée au moyen d'au moins le premier vecteur de regard et d'un filtre de Kalman, le filtre de Kalman utilisant une série d'estimations du point de regard à l'écran.

2. Méthode selon la revendication 1, dans laquelle le réseau neuronal artificiel détecte dans la première région d'intérêt (310) au moins un premier emplacement de repère d'oeil (403) d'un premier repère d'oeil et un second emplacement de repère d'oeil (404) d'un second repère d'oeil.

3. Méthode selon une quelconque des revendications précédentes, dans laquelle la construction du vecteur de regard est réalisée au moyen d'un algorithme de régression à vecteur de support, l'algorithme de régression à vecteur de support utilisant comme entrée au moins le premier emplacement de repère d'oeil (403) et le second emplacement de repère d'oeil (404).

4. Méthode selon une quelconque des revendications précédentes, dans laquelle le réseau neuronal artificiel est un réseau neuronal à sablier.

5. Méthode selon une quelconque des revendications précédentes, comprenant par ailleurs l'étape suivante :

- lancement de la construction d'un vecteur d'estimation de pose de tête, dans lequel la construction du vecteur d'estimation de pose de tête est effectuée en utilisant au moins le premier emplacement de repère de visage (301) et le second emplacement de repère de visage (302) ;

dans laquelle la localisation du premier point de regard sur l'écran (151) est basée sur le vecteur d'estimation de pose de tête.

6. Méthode selon la revendication 5, dans laquelle la construction du vecteur d'estimation de pose de tête est effectuée au moins au moyen d'un modèle de visage tridimensionnel, et dans laquelle le modèle de visage tridimensionnel utilise comme entrée au moins le premier emplacement de repère de visage (301) et le second emplacement de repère de visage (302).

7. Méthode selon une quelconque des revendications précédentes, comprenant par ailleurs les étapes suivantes :

- lancement de l'acquisition d'au moins une seconde image;
- lancement de la localisation d'un troisième emplacement de repère de visage du premier repère de visage dans la seconde image ;
- lancement de l'estimation d'un quatrième emplacement de repère de visage du premier repère de visage dans la première image (300), dans lequel l'estimation du quatrième emplacement de repère de visage est effectuée au moyen d'une équation de flux optique et du troisième emplacement de repère de visage ; et
- lancement de la détection d'un cinquième emplacement de repère de visage du premier repère de visage dans la première image (300);

et dans laquelle la localisation du premier emplacement de repère de visage (301) dans la première image (300) est basée sur le quatrième emplacement de repère de visage et sur le cinquième emplacement de repère de visage.

8. Méthode selon la revendication 7, dans laquelle la localisation du premier emplacement de repère de visage (301) dans la première image (300) est basée sur une distance de repère, la distance de repère étant la distance entre le troisième emplacement de repère de visage et le quatrième emplacement de repère de visage.

9. Méthode selon les revendications 7 ou 8, dans laquelle le premier emplacement de repère de visage (301) est égal à la moyenne pondérée entre le quatrième emplacement de repère de visage et le cinquième emplacement de repère de visage.

10. Méthode selon une quelconque des revendications précédentes, comprenant par ailleurs l'étape suivante :

• lancement de la localisation d'un second point de regard sur l'écran (151), dans lequel la localisation du second point de regard est effectuée au moyen d'au moins le premier vecteur de regard;

dans laquelle la localisation du premier point de regard sur l'écran (151) est effectuée au moyen du second point de regard.

11. Méthode selon la revendication 10, dans laquelle la localisation du second point de regard sur l'écran (151) est effectuée au moyen d'une fonction de calibrage, la fonction de calibrage dépendant d'au moins un emplacement d'un point de calibrage du regard et d'une estimation de l'emplacement du point de calibrage du regard.

12. Méthode selon la revendication 10, dans laquelle la localisation du premier point de regard sur l'écran (151) est effectuée au moyen d'un troisième point de regard et d'une matrice de covariance du bruit de processus, dans laquelle la matrice de covariance du bruit de processus comprend une pluralité d'entrées, lesdites entrées étant une fonction monotone croissante de la distance entre le second point de regard et le troisième point de regard.

13. Système de traitement des données (100) comprenant au moins un processeur (110) configuré afin d'effectuer la méthode selon une quelconque des revendications précédentes.

14. Produit de programme informatique comprenant des instructions qui, lorsque le produit de programme informatique est exécuté par un dispositif informatique, amènent le dispositif informatique à réaliser la méthode selon une quelconque des revendications 1 à 12.

15. Support de stockage lisible par ordinateur comprenant des instructions qui, lorsqu'elles sont exécutées par un dispositif informatique, amènent le dispositif informatique à réaliser la méthode selon une quelconque des revendications 1 à 12.

Fig. 1

210 — Initiating the acquiring of the first image

Initiating the locating of the first face landmark location of the first face landmark in the first image — 220

230 — Initiating the locating of the second face landmark location of the second face landmark in the first image

Initiating the selecting of the first region of interest — 240

250 — Initiating the constructing of the first gaze vector

Initiating the locating of the first point of gaze onto the screen — 260

200

Fig. 2

Fig. 3a

Fig. 3b

Fig. 3c

Fig. 4a

Fig. 4b

Fig. 5

**EP 3 893 090 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019212815 A

- US 2020043236 A